# EUROPEAN PATENT APPLICATION

(11) **EP 2 799 859 A1**
(43) Date of publication of application: **05.11.2014**
(21) Application number: 12859589.9
(22) Date of filing: 21.12.2012
(51) Int. Cl.: G01N 27/447

(54) **CONTROL METHOD, CONTROL DEVICE, CONTROL SYSTEM, AND CONTROL PROGRAM**

(30) Priority: 22.12.2011 JP 2011281503
(71) Applicant: Sharp Kabushiki Kaisha, Osaka-shi, Osaka 545-8522 (JP)
(72) Inventor: KINOSHITA, Hideki, Osaka-shi, Osaka 545-8522 (JP); UNUMA, Yutaka, Osaka-shi, Osaka 545-8522 (JP); MARUO, Yuji, Osaka-shi, Osaka 545-8522 (JP)
(74) Representative: Müller - Hoffmann & Partner
(86) International application number: PCT/JP2012/083265
(87) International publication number: WO 2013/094735

(57) **Abstract**

An electrophoresis control device, on the basis of a current value of current flowing due to applying a voltage to a conducting medium, controls an amount of electric power to supply to that conducting medium.

## Description

### Technical Field

The present invention relates to a control method, a control device, a control system, and a control program. This application claims priority to Japanese Patent Application No. 2011-281503 filed in the Japan Patent Office on December 22, 2011, the contents of which are hereby incorporated by reference.

### Background Art

All proteins have an individually characteristic electric charge and molecular weight. For this reason, by separating a protein solution present in a living organism by electric charge or molecular weight, it is possible to separate various proteins. Particularly, even among proteins of the same type having almost the same molecular weight, there exist protein types with different electric charges due to post-translational modification. Note that post-translational modification refers to the chemical modification of a translated protein. Consequently, separating proteins on the basis of a characteristic isoelectric point is useful. Two-dimensional electrophoresis is an established technique of separating proteins by isoelectric point and molecular weight.

Two-dimensional electrophoresis enables the separation of more proteins at high resolution. Furthermore, two-dimensional electrophoresis may also be conducted with the specimen to use in the presence or absence of a denaturant, and several hundred to several thousand types of proteins are separable at once.

Two-dimensional electrophoresis is made up of two electrophoresis steps: an isoelectric point electrophoresis step that separates proteins on the basis of electric charge, and a slab gel electrophoresis step that separates proteins on the basis of molecular weight. Note that in slab gel electrophoresis, electrophoresis using polyacrylamide gel in the presence of sodium dodecyl sulfate (hereinafter designated "SDS-PAGE") is an established technique.

With two-dimensional electrophoresis, a protein specimen is introduced into a first-dimension gel, and isoelectric point electrophoresis is conducted. After that, the first-dimension gel is taken out and connected to a second-dimension gel, and the proteins are separated by electrophoresis in the second dimension based on molecular weight. At this point, the first-dimension gel used to conduct isoelectric point electrophoresis has an elongated, thin shape.

With isoelectric point electrophoresis, a DC voltage is applied at both ends of the first-dimension gel into which the sample is introduced. At this point, the application of the voltage is controlled to be a constant voltage, but the voltage value is raised in a stepwise manner. This is to limit the movement of polar molecules in impurities included in the sample.

PTL 1 describes applying a DC electric field to polyacrylamide (a conducting medium), and when forming a pH gradient inside the gel, using two pairs of electrodes to apply a low voltage when a pH gradient is already sufficiently formed, and a high voltage when the pH gradient is insufficient. Also, PTL 2 describes providing temperature sensing means that senses the temperature of the gel medium itself, and controlling voltage on the basis of a signal from the temperature sensing means.

Citation List

Patent Literature

PTL 1: Japanese Unexamined Patent Application Publication No. 03-29844
PTL 2: Japanese Unexamined Patent Application Publication No. 01-195357

### Summary of Invention

### Technical Problem

However, with the technology described in PTL 1 and 2, high heat may be produced when there is a large amount of polar molecules in impurities included in the sample, or when the amount of sample is large. The technologies described in PTL 1 and 2 are flawed in that an accurate analysis result is no longer obtained when high heat is produced.

The present invention, being devised in light of the above problem, provides a control method, control device, control system, and control program that enable a more accurate analysis result to be obtained.

### Solution to Problem

(1) The present invention has been devised in order to solve the above problem, and a first aspect of the present invention is a control method by which an electrophoresis control device, on the basis of a value of current flowing due to applying a voltage to a conducting medium, controls an amount of electric power to supply to the conducting medium.
(2) Note that, in the first aspect of the present invention, the controlling of the amount of electric power may also control the amount of electric power to supply to the conducting medium on the basis of a value of current flowing in the conducting medium, and a predetermined threshold value.
(3) Also, in the first aspect of the present invention, the controlling of the amount of electric power may also control the amount of electric power to supply to the conducting medium on the basis of a value of current flowing in the conducting medium, a first threshold value, and a second threshold value.
(4) Also, in the first aspect of the present invention, the conducting medium may also contain polar molecules and ampholyte.
(5) Also, in the first aspect of the present invention, in the power control process, a voltage value to apply to the conducting medium may also be controlled.
(6) Also, in the first aspect of the present invention, the controlling of the amount of electric power may also keep constant the voltage value to apply to the conducting medium in a case in which a value of current flowing in the conducting medium has reached the threshold value.
(7) Also, in the first aspect of the present invention, the controlling of the amount of electric power may also decrease the voltage value to apply to the conducting medium in a case in which a value of current flowing in the conducting medium has reached the threshold value.
(8) Also, in the first aspect of the present invention, the controlling of the amount of electric power may also compute a resistance value variation so that a value of current flowing in the conducting medium will not exceed the threshold value, and control a voltage value on the basis of the resistance value variation.
(9) Also, in the first aspect of the present invention, the controlling of the amount of electric power may also apply voltage to the conducting medium in a constant voltage mode that maintains a voltage value, or in a linear gradient mode that linearly increases a voltage value.
(10) Also, in the first aspect of the present invention, the controlling of the amount of electric power may also keep constant the voltage value to apply to the conducting medium in a case in which a value of current flowing in the conducting medium reaches the threshold value while applying a voltage to the conducting medium in a linear gradient mode that linearly increases the voltage value, and decrease the voltage value to apply to the conducting medium in a case in which a value of current flowing in the conducting medium reaches the threshold value while applying a voltage to the conducting medium in a constant voltage mode that maintains the voltage value.
(11) Also, in the first aspect of the present invention, the controlling of the amount of electric power may also display information indicating an error in a case in which the amount of electric power to supply to the conducting medium has exceeded a predetermined value.
(12) Also, in the first aspect of the present invention, the conducting medium may also be a gel.
(13) Also, a second aspect of the present invention is a control device provided with a controller that, on the basis of a value of current flowing due to applying a voltage to a conducting medium, controls an amount of electric power to supply to the conducting medium.
(14) Also, a third aspect of the present invention is a control system provided with an electrophoresis tool equipped with a chamber in which a pair of electrodes contacting an inductive medium are disposed, and a control device provided with a controller that, on the basis of a value of current flowing due to applying a voltage to the conducting medium, controls an amount of electric power to supply to the conducting medium.
(15) Also, a fourth aspect of the present invention is a control program for causing a computer of a control device to control, on the basis of a value of current flowing due to applying a voltage to a conducting medium, an amount of electric power to supply to the conducting medium. Advantageous Effects of Invention

According to the present invention, a more accurate analysis result may be obtained.

### Brief Description of Drawings

[FIG. 1] FIG. 1 is a perspective view of an electrophoresis control device using an electrophoresis system according to an embodiment of the present invention.
[FIG. 2] FIG. 2 is an explanatory diagram illustrating the installation of an IEF chip according to the present embodiment.
[FIG. 3] FIG. 3 is a schematic block diagram illustrating a configuration of a power control device according to the present embodiment.
[FIG. 4] FIG. 4 is a schematic block diagram illustrating a configuration of a linear gradient processor according to the present embodiment.
[FIG. 5] FIG. 5 is a schematic block diagram illustrating a configuration of a constant voltage processor according to the present embodiment.
[FIG. 6] FIG. 6 is a flowchart illustrating an example of operations by a power control device according to the present embodiment.
[FIG. 7] FIG. 7 is a flowchart illustrating an example of operations by a linear gradient processor according to the present embodiment.
[FIG. 8] FIG. 8 is a flowchart illustrating an example of operations by a constant voltage processor according to the present embodiment.
[FIG. 9] FIG. 9 is a diagram illustrating an example of the relationship between the voltage value and the current value according to the present embodiment.
[FIG. 10] FIG. 10 is a diagram illustrating another example of the relationship between the voltage value and the current value according to the present embodiment.
[FIG. 11] FIG. 11 is a diagram illustrating another example of the relationship between the voltage value and the current value according to the present embodiment.
[FIG. 12] FIG. 12 is a diagram illustrating another example of the relationship between the voltage value and the current value.
[FIG. 13] FIG. 13 is a diagram illustrating another example of the relationship between the voltage value and the current value.
[FIG. 14] FIG. 14 is a diagram illustrating an example of an IEF chip when soot is produced.
[FIG. 15] FIG. 15 is a diagram illustrating another example of the relationship between the voltage value and the current value according to the present embodiment.
[FIG. 16] FIG. 16 is a diagram illustrating another example of the relationship between the voltage value and the current value.
[FIG. 17] FIG. 17 is a diagram illustrating another example of the relationship between the voltage value and the current value.
[FIG. 18] FIG. 18 is a diagram illustrating another example of the relationship between the voltage value and the current value.
[FIG. 19] FIG. 19 is a diagram illustrating an example of the relationship between the voltage value and the current value according to an exemplary modification of the present embodiment.
[FIG. 20] FIG. 20 is a diagram illustrating an example of a spot analysis result according to an exemplary modification of the present embodiment.
[FIG. 21] FIG. 21 is a diagram illustrating an example of the relationship between the voltage value and the current value according to another exemplary modification of the present embodiment.
[FIG. 22] FIG. 22 is a diagram illustrating an example of the relationship between the voltage value and the current value according to another exemplary modification of the present embodiment.
[FIG. 23] FIG. 23 is a flowchart illustrating an example of operations by a linear gradient processor according to the present modification.
[FIG. 24] FIG. 24 is a perspective view of an electrophoresis system according to another exemplary modification of the present embodiment.

### Description of Embodiment

Hereinafter, an embodiment of the present invention will be described in detail and with reference to the drawings.

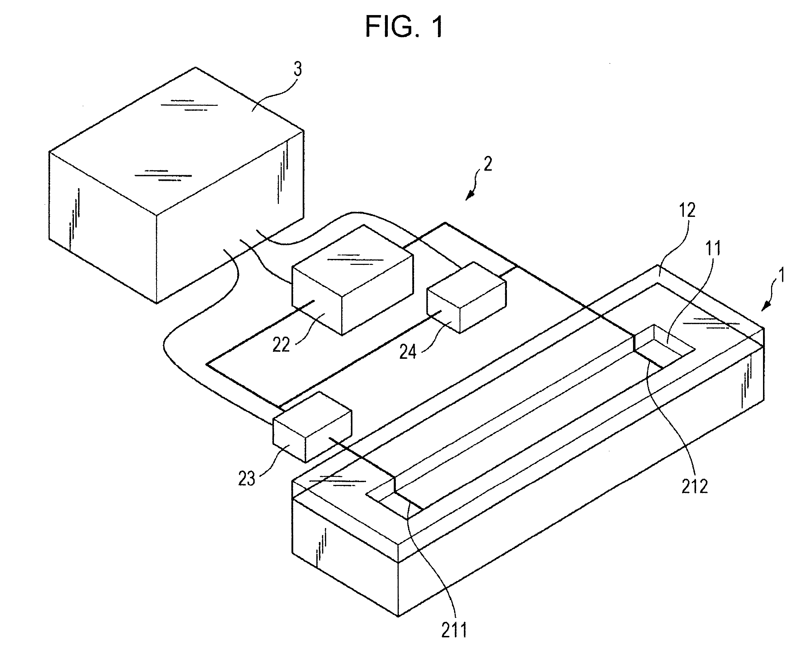

FIG. 1 is a perspective view of an electrophoresis control device using an electrophoresis system according to an embodiment of the present invention. In this diagram, an electrophoresis control device using an electrophoresis system is equipped with an electrophoresis tool 1, a power supply circuit 2, and a power control device 3. The power supply circuit 2 is equipped with a positive electrode 211, a negative electrode 212, a power source device 22, a current measurement device 23, and a voltage measurement device 24.

The electrophoresis tool 1 is provided with an electrophoresis chamber 11 on the top face thereof. The electrophoresis chamber 11 is a rectangular channel. The bottom and side faces of the electrophoresis chamber 11 are made of an insulating material such as ceramic, resin, or glass. Note that the electrophoresis tool 1 is provided with a cooling unit, such as a Peltier or water cooling device, underneath the electrophoresis chamber 11.

Note that in FIG. 1, the electrophoresis tool 1 is provided with an openable/closable cover 12. The cover 12 is made of an insulating material such as glass.

The positive electrode 211 is installed on one lengthwise end of the electrophoresis chamber 11, while the negative electrode 212 is installed on the other end.

The power source device 22 supplies power under control by the power control device 3.

The current measurement device 23 is connected to the power source device 22 and the positive electrode 211. The current measurement device 23 measures current, and generates a current value It expressing the measured current.

For example, the current measurement device 23 measures current at intervals of a unit time Δt, and generates the current value It. Herein, the unit time Δt may be 0.1 s or less, for example. The current measurement device 23 outputs the generated current value It to the power control device 3.

The voltage measurement device 24 is connected to the positive electrode 211 and the negative electrode 212. The voltage measurement device 24 measures the voltage between the positive electrode 211 and the negative electrode 212, and generates a voltage value Vₜ expressing the measured voltage. For example, the voltage measurement device 24 measures voltage at intervals of the unit time Δt, and generates the voltage value Vₜ. The voltage measurement device 24 outputs the generated voltage value to the power control device 3. Note that time t of the current value It and the voltage value Vₜ represents the elapsed time since the start of the process (electrophoresis).

The power control device 3 controls the power supplied by the power source device 22 on the basis of the current value It input from the current measurement device 23 and the voltage value Vₜ input from the voltage measurement device 24.

Specifically, the power control device 3 controls the power on the basis of the current value Iₜ and a first limit value Iₗᵢₘᵢₜ₁. In addition, the power control device 3 controls the power on the basis of the current value It and a second limit value Iₗᵢₘᵢₜ₂. In addition, the power control device 3 controls the power on the basis of a time-integrated voltage value obtained by integrating the voltage value Vₜ over the time t. Note that the power control device 3 may also include a display unit, and display the current value Iₜ and the voltage value Vₜ on the display unit.

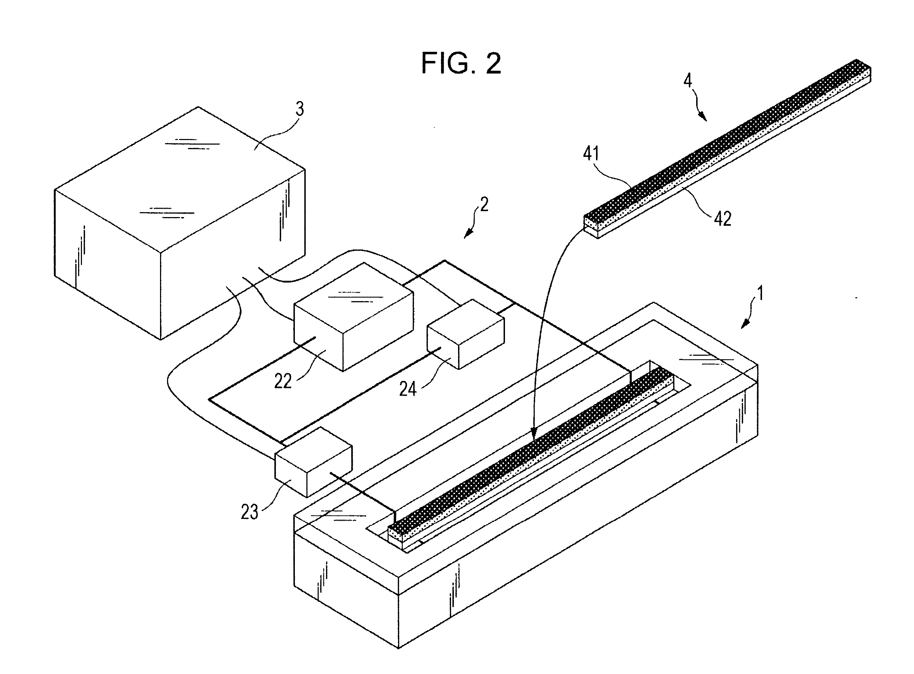

FIG. 2 is an explanatory diagram illustrating the installation of an isoelectric focusing (IEF) chip 4 according to the present embodiment. In the illustrated IEF chip 4, a conducting medium 42 is bonded to a support member 41. In FIG. 2, the IEF chip 4 is conveyed by holding the support member 41, and is installed in the electrophoresis chamber 11 of the electrophoresis tool 1. Note that the present invention is not limited the above, and only the conducting medium 42 may be installed in the electrophoresis chamber 11.

Also, in FIG. 2, the cover 12 covers the electrophoresis chamber 11 with the IEF chip 4 installed therein. Consequently, in the electrophoresis system, drying of the gel may be prevented. However, the present invention is not limited thereto, and an insulating material such as mineral oil may be added over the conducting medium 42 so that the conducting medium 42 is not in contact with air.

The conducting medium 42 is a gel, and has been gelled by a gelling agent. The gelling agent is selected from a group consisting of polyacrylamide, agarose, agar, and starch, for example. A buffer solution is mixed into the conducting medium 42. The buffer solution contains 8 M urea, 2 M thiourea, 4% CHAPS (3-[(3-Cholamidopropyl)dimethylammonio]-propanesulfonate), 20 mM dithiothreitol, and 0.5% ampholyte, for example. However, the present invention is not limited to the above gel, gelling agent, or buffer solution.

### <Configuration of power control device 3>

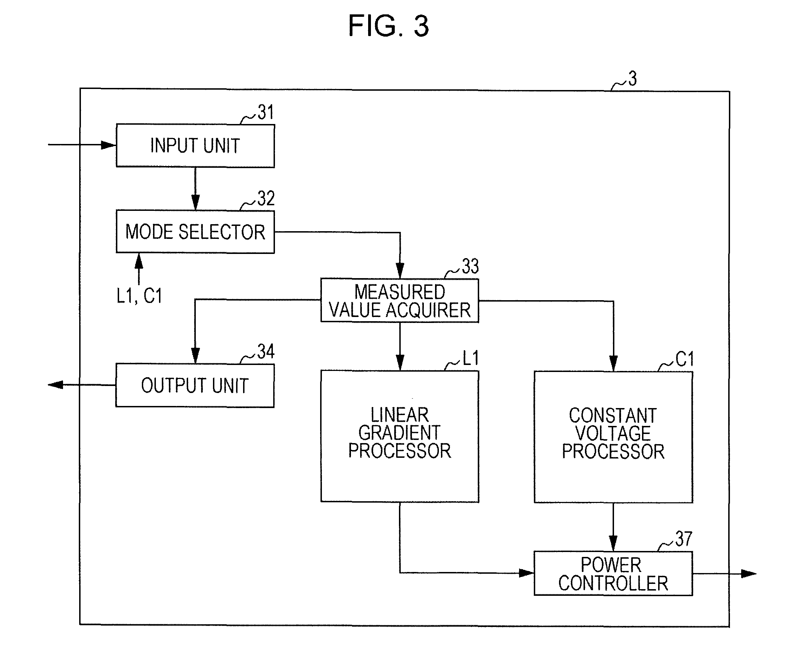

FIG. 3 is a schematic block diagram illustrating a configuration of the power control device 3 according to the present embodiment. In this diagram, the power control device 3 is configured to include an input unit 31, a mode selector 32, a measured value acquirer 33, an output unit 34, a linear gradient processor L1, a constant voltage processor C1, and a power controller 37.

The input unit 31 receives input from a user, and outputs information indicating the received input to the mode selector 32.

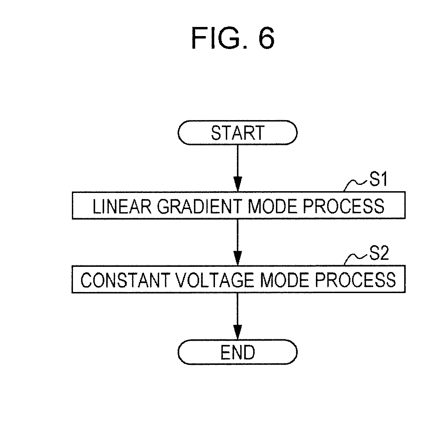

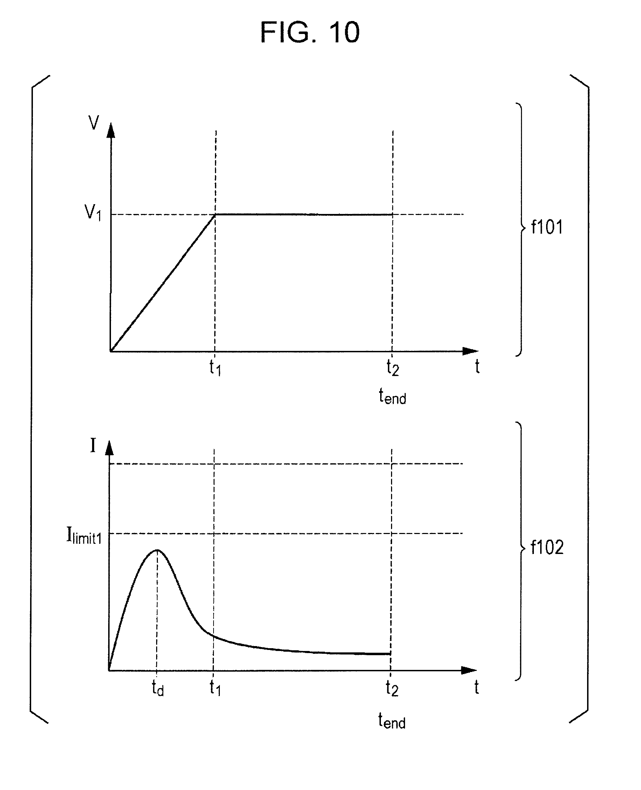

The mode selector 32, on the basis of information input from the input unit 31, generates mode information indicating a voltage application mode, an application time, and a target voltage value selected by the user. Herein, a voltage application mode is a scheme that applies a voltage between the positive electrode 211 and the negative electrode 212 (hereinafter also designated the applied voltage). The voltage application mode may be a "linear gradient mode" or a "constant voltage mode", for example. The voltage application mode may also combine multiple modes. For example, in the power control device 3, it is possible to set "linear gradient mode" while the applied voltage is at least a target voltage value V₁ and until an application time t₁ elapses, and after that, set "constant voltage mode" for an application time (t₂-t₁) (see FIGS. 6 and 10). Hereinafter, in the present embodiment, a process conducted by the power control device 3 in this combination of modes will be described, but the present invention is not limited thereto, and other combinations may be used, or modes may not be combined. Note that a single cycle of a process by one of either the linear gradient processor L1 or the constant voltage processor C1 is designated a step process, and a step number presents the number of cycles of a step process.

In addition, step completion information indicating that a step process is complete is input into the mode selector 32 from the linear gradient processor L1 or the constant voltage processor C1 discussed later. The mode selector 32, on the basis of the step completion information, generates mode information indicating the mode after switching.

The mode selector 32 outputs the generated mode information to the measured value acquirer 33.

The measured value acquirer 33 acquires the current value It from the current measurement device 23, and acquires the voltage value Vₜ from the voltage measurement device 24. The measured value acquirer 33 outputs the acquired current value It and voltage value Vₜ to the output unit 34. Additionally, in the case in which the mode information input from the mode selector 32 indicates "linear gradient mode", the measured value acquirer 33 outputs the acquired current value It and voltage value Vₜ to the linear gradient processor L1. In the case in which the mode information input from the mode selector 32 indicates "constant voltage mode", the measured value acquirer 33 outputs the acquired current value It and voltage value Vₜ to the constant voltage processor C1.

The output unit 34 is a display. The output unit 34 displays information expressing the current value Iₜ and the voltage value Vₜ input from the measured value acquirer 33.

In the case of "linear gradient mode", the linear gradient processor L1 decides and sets the power to supply to the positive electrode 211 and the negative electrode 212 on the basis of the current value Iₜ and the voltage value Vₜ input from the measured value acquirer 33. In other words, the linear gradient processor L1 decides and sets the power to supply to the conducting medium 42.

Specifically, the linear gradient processor L1 decides and sets the voltage value V_{t+Δt} of the applied voltage to a value higher than the voltage value Vₜ in the case in which the current value Iₜ is less than the first limit value Iₗᵢₘᵢₜ₁. Note that the voltage value V_{t+Δt} is the voltage value at the time t+Δt. On the other hand, in the case in which the current value It is equal to or greater than the first limit value Iₗᵢₘᵢₜ₁, the linear gradient processor L1 decides and sets the voltage value V_{t+Δt} of the applied voltage to the same value as the voltage value Vₜ. In other words, the linear gradient processor L1 keeps the voltage value of the applied voltage.

However, when the current value Iₜ is equal to or greater than the first limit value Iₗᵢₘᵢₜ₁, if the current value Iₜ is equal to or greater than the second limit value Iₗᵢₘᵢₜ₂, or if the time-integrated voltage value is equal to or greater than a predetermined value β, the linear gradient processor L1 decides and sets the voltage value V_{t+Δt} of the applied voltage to "0".

In other words, in the above cases, the linear gradient processor L1 ends electrophoresis (also designated the process end).

The linear gradient processor L1 outputs information indicating the decided power to the power controller 37.

In the case of "constant voltage mode", the constant voltage processor L1 decides and sets the power to supply to the positive electrode 211 and the negative electrode 212 on the basis of the current value It and the voltage value Vₜ input from the measured value acquirer 33.

Specifically, the constant voltage processor C1 decides and sets the voltage value V_{t+Δt} of the applied voltage to the same value as the voltage value Vₜ or a value higher than the voltage value Vt in the case in which the current value It is less than the first limit value Iₗᵢₘᵢₜ₁. On the other hand, in the case in which the current value It is equal to or greater than the first limit value Iₗᵢₘᵢₜ₁, the constant voltage processor C1 decides and sets the voltage value V_{t+Δt} of the applied voltage to a lower value than the voltage value Vₜ. In other words, the constant voltage processor C1 decreases the voltage value of the applied voltage. At this point, the constant voltage processor C1 computes the variation in the resistance value so that the current Iₜ will not exceed the first limit value Iₗᵢₘᵢₜ₁, and decides a voltage value on the basis of the computed resistance value.

In addition, when the current value It is equal to or greater than the first limit value Iₗᵢₘᵢₜ₁, if the current value It is equal to or greater than the second limit value Iₗᵢₘᵢₜ₂, or if the time-integrated voltage value is equal to or greater than a predetermined value, the constant voltage processor C1 decides and sets the voltage value V_{t+Δt} of the applied voltage to "0". In other words, in the above cases, the constant voltage processor C1 ends electrophoresis.

The linear gradient processor L1 outputs information indicating the decided power to the power controller 37.

The power controller 37 controls the power source device 22 so as to supply the power indicated by the information input from the linear gradient processor L1 or the constant voltage processor C1. For example, the power controller 37 causes the power source device 22 to apply an applied voltage with the voltage value V_{t+Δt} decided by the linear gradient processor L1 or the constant voltage processor C1. In addition, in the case in which a signal indicating the process end is input from the linear gradient processor L1 or the constant voltage processor C1, the power controller 37 causes the power source device 22 to suspend the application of voltage.

### <Configuration of linear gradient processor L1>

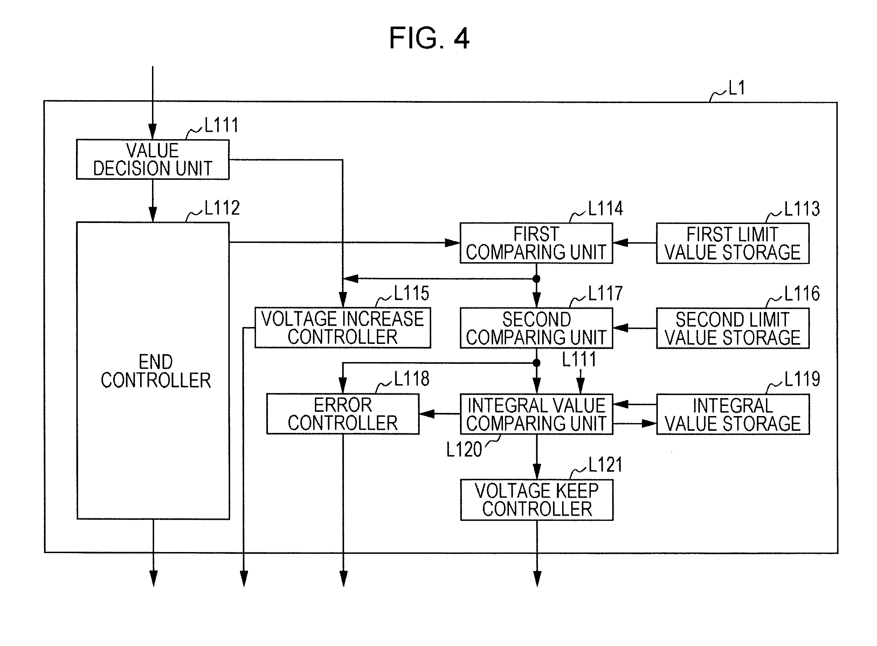

FIG. 4 is a schematic block diagram illustrating a configuration of the linear gradient processor L1 according to the present embodiment. In this diagram, the linear gradient processor L1 is configured to include a value decision unit L111, an end controller L112, first limit value storage L113, a first comparing unit L114, a voltage increase controller L115, second limit value storage L116, a second comparing unit L117, an error controller L118, integral value storage L119, an integral value comparing unit L120, and a voltage keep controller L121.

The value decision unit L111 decides an increase value α1 of the voltage value on the basis of the target voltage value V₁, the voltage value Vₜ input from the measured value acquirer 33, the time t, and the application time t₁. The value decision unit L111 outputs the decided increase value α1 to the voltage increase controller L115.

In addition, the value decision unit L111 outputs the current value It and the voltage value Vₜ input from the measured value acquirer 33 to the end controller L112 and the integral value comparing unit L120.

The end controller L112 stores the target voltage value V₁ and the application time t₁ in advance.

The end controller L112 computes an end time t_{end1} by adding the application time to the start time of a step process. The end controller L112 determines whether or not to end the step process of the linear gradient processor L1, on the basis of the voltage value Vₜ input from the value decision unit L111 and the time t thereof, and the target voltage value V₁ and the end time t_{end1}. In the case of determining to end the step process, step completion information is output to the mode selector 32. In the case of determining to not end the step process, the end controller L112 outputs the voltage value Vₜ and the current value It input from the value decision unit L111 to the first comparing unit L114.

The first limit value storage L113 stores the first limit value Iₗᵢₘᵢₜ₁ of the current value.

The first limit value Iₗᵢₘᵢₜ₁ is 100 µA (microamperes), for example.

The first comparing unit L114 determines whether or not to not increase the voltage value V_{t+Δt}, on the basis of the current value Iₜ input from the end controller L112, and the first limit value Iₗᵢₘᵢₜ₁ stored by the first limit value storage L113. In the case of determining to not increase the voltage value V_{t+Δt}, the first comparing unit L114 outputs the current value It input from the end controller L112 to the second comparing unit L117. In other cases, the first comparing unit L114 outputs the voltage value Vₜ input from the end controller L112 to the voltage increase controller L115.

The voltage increase controller L115 decides and sets the voltage value V_{t+Δt} to a value increased above the voltage value Vₜ, on the basis of the voltage value Vₜ input from the first comparing unit L114 and the increase value α1 input from the value decision unit L111. The voltage increase controller L115 outputs the decided voltage value V_{t+Δt} to the power controller 37.

The second limit value storage L116 stores the second limit value Iₗᵢₘᵢₜ₂ of the current value.

The second limit value Iₗᵢₘᵢₜ₂ is a larger value than Iₗᵢₘᵢₜ₁, and is 300 µA (microamperes), for example.

The second comparing unit L117 determines whether or not to end the process of the power control device 3, on the basis of the current value It input from the first comparing unit L114, and the second limit value Iₗᵢₘᵢₜ₂ stored by the second limit value storage L116. In the case of determining to end the process of the power control device 3, the second comparing unit L117 outputs process end information indicating the process end to the error controller L118. In the case of determining to not end the process of the power control device 3, the second comparing unit L117 outputs an integral value compare instruction to the integral value comparing unit L120.

The error controller L118, in the case in which process end information is input, outputs that process end information to the power controller 37.

The integral value storage L119 stores the time-integrated voltage value obtained by integrating the voltage value Vₜ over the time t.

At this point, the integral value storage L119 stores a time-integrated voltage value since the current value Iₜ exceeded the first limit value Iₗᵢₘᵢₜ₁. Additionally, the integral value storage L119 stores the limit value β. The limit value β is 1000 Vh, for example.

The integral value comparing unit L120 computes the time-integrated voltage value since the current value It exceeded the first limit value Iₗᵢₘᵢₜ₁ up to the time t, on the basis of the time-integrated voltage value up to the time t-Δt stored by the integral value storage L119, and the voltage value Vₜ input from the value decision unit L111. The integral value comparing unit L120 determines whether or not to end the process of the power control device 3, on the basis of the computed time-integrated voltage value, and the limit value β stored by the integral value storage L119. In the case of determining to end the process of the power control device 3, the integral value comparing unit L120 outputs process end information to the error controller L118. In the case of determining to not end the process of the power control device 3, the integral value comparing unit L120 generates a voltage keep instruction including the voltage value Vₜ input from the value decision unit L111, and outputs the generated voltage keep instruction to the voltage keep controller L121.

The voltage keep controller L121 decides and sets the voltage value V_{t+Δt} to the voltage value Vₜ included in the voltage keep instruction input from the integral value comparing unit L120. In other words, the voltage keep controller L121 decides and sets the voltage value V_{t+Δt} to the same value as the voltage value Vₜ. The voltage keep controller L121 outputs the decided voltage value V_{t+Δt} to the power controller 37.

### <Configuration of constant voltage processor C1>

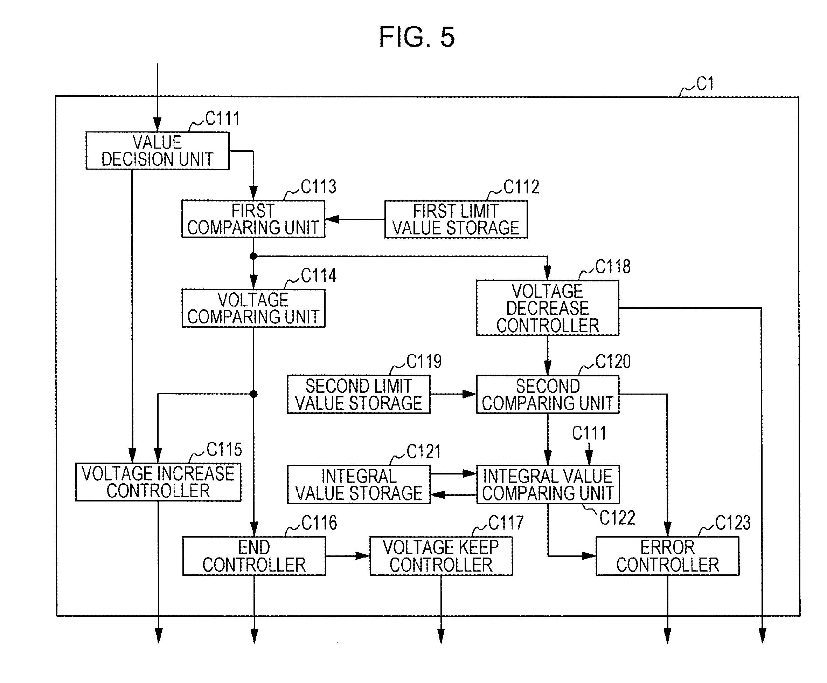

FIG. 5 is a schematic block diagram illustrating a configuration of the constant voltage processor C1 according to the present embodiment. In this diagram, the constant voltage processor C1 is configured to include a value decision unit C111, first limit value storage C112, a first comparing unit C113, a voltage comparing unit C114, a voltage increase controller C115, an end controller C116, a voltage keep controller C117, a voltage decrease controller C118, second limit value storage C119, a second comparing unit C120, integral value storage C121, an integral value comparing unit C122, and an error controller C123.

The value decision unit C111 stores the current value I_{t-Δt} and the voltage value V_{t-Δt} input from the measured value acquirer 33. The value decision unit C111 decides and sets a differential value α2 of the voltage value, on the basis of the stored current value I_{t-Δt} and voltage value V_{t-Δt}, and the current value Iₜ and voltage value Vₜ input from the measured value acquirer 33. The value decision unit C111 outputs the decided differential value α2 to the voltage increase controller C115 and the voltage decrease controller C118. The value decision unit C111 outputs the current value Iₜ and the voltage value Vₜ input from the measured value acquirer 33 to the first comparing unit C113 and the integral value comparing unit C122.

The first limit value storage C112 stores the first limit value Iₗᵢₘᵢₜ₁ of the current value.

The first comparing unit C113 determines whether or not to decrease the voltage value V_{t+Δt}, on the basis of the current value It input from the value decision unit C111, and the first limit value Iₗᵢₘᵢₜ₁ stored by the first limit value storage C112. In the case of determining to decrease the voltage value V_{t+Δt}, the first comparing unit C113 outputs the current value Iₜ to the voltage decrease controller C118. In other cases, the first comparing unit C113 outputs the voltage value Vₜ to the voltage comparing unit C114.

The voltage comparing unit C114 stores a keep voltage value. Note that the keep voltage value is a voltage value that acts as a standard for keeping in the process of the constant voltage processor C1, and is the final voltage value from the last step (in the present embodiment, V₁; hereinafter designated the keep voltage value V₁). However, the keep voltage value may also be a preset voltage value.

The voltage comparing unit C114 determines whether or not to not increase the voltage value V_{t+Δt}, on the basis of the voltage value Vₜ input from the first comparing unit C113, and the keep voltage value V₁ being stored. In the case of determining to not increase the voltage value V_{t+Δt}, the voltage comparing unit C114 outputs the voltage value Vₜ and the time t to the end controller C116. In other cases, the voltage comparing unit C114 outputs the voltage value Vₜ to the voltage increase controller C115.

The voltage increase controller C115 decides and sets the voltage value V_{t+Δt} to a value increased above the voltage value Vₜ, on the basis of the voltage value Vₜ input from the voltage comparing unit C114 and the differential value α2 input from the value decision unit C111. The voltage increase controller C115 outputs the decided voltage value V_{t+Δt} to the power controller 37.

The end controller C116 stores an application time. The end controller C116 computes an end time t_{end2} by adding the application time to the start time of a step process. The end controller C116 determines whether or not to end the process of the constant voltage processor C1, on the basis of the time t input from the voltage comparing unit C114, and the end time t_{end2}. In the case of determining to end the process of the constant voltage processor C1, the end controller C116 outputs information indicating the process end to the power controller 37. In the case of determining to not end the process of the constant voltage processor C1, the end controller C116 outputs the voltage value Vₜ input from the voltage comparing unit C114 to the voltage keep controller C117.

The voltage keep controller C117 decides and sets the voltage value V_{t+Δt} to the voltage value Vₜ input from the end controller C116. In other words, the voltage keep controller C117 keeps the applied voltage to a constant voltage by deciding and setting the voltage value V_{t+Δt} to the same value as the voltage value Vₜ. The voltage keep controller L121 outputs the decided voltage value V_{t+Δt} to the power controller 37.

The voltage decrease controller C118 decides and sets the voltage value V_{t+Δt} to a value decreased below the voltage value Vₜ, on the basis of the voltage value Vₜ input from the first comparing unit C113, and the differential value α2 input from the value decision unit C111. The voltage decrease controller C118 outputs the decided voltage value V_{t+Δt} to the power controller 37. The voltage decrease controller C118 outputs the current value It input from the first comparing unit C113 to the second comparing unit C120.

The second limit value storage C119 stores the second limit value Iₗᵢₘᵢₜ₂ of the current value.

The second comparing unit C120 determines whether or not to end the process of the power control device 3, on the basis of the current value Iₜ input from the voltage decrease controller C118, and the second limit value Iₗᵢₘᵢₜ₂ stored by the second limit value storage C119. In the case of determining to end the process of the power control device 3, the second comparing unit C120 outputs process end information to the error controller C123. In other cases, the second comparing unit C120 outputs an integral value compare instruction to the integral value comparing unit C122.

The integral value storage C121 stores the time-integrated voltage value obtained by integrating the voltage value Vₜ over the time t.

At this point, the integral value storage C121 stores a time-integrated voltage value since the current value It exceeded the first limit value Iₗᵢₘᵢₜ₁. Additionally, the integral value storage C121 stores the limit value β. The limit value β is 1000 Vs, for example.

The integral value comparing unit C122 computes a time-integrated voltage value, that is, the time-integrated voltage value since the current value It exceeded the first limit value Iₗᵢₘᵢₜ₁ up to the time t, on the basis of the time-integrated voltage value up to the time t-Δt stored by the integral value storage C121, and the voltage value Vₜ input from the value decision unit C111. The integral value comparing unit C122 determines whether or not to end the process of the constant voltage processor C1, on the basis of the computed time-integrated voltage value, and the limit value β stored by the integral value storage C121. In the case of determining to end the process of the constant voltage processor C1, the integral value comparing unit C122 outputs a signal indicating the process end to the error controller C123.

The error controller C123, in the case in which a signal indicating the process end is input, outputs that signal to the power controller 37.

### <Operations of power control device 3>

FIG. 6 is a flowchart illustrating an example of operations by the power control device 3 according to the present embodiment.

(Step S1) The mode selector 32 selects "linear gradient mode". The measured value acquirer 33 outputs a current value It and a voltage value Vₜ to the linear gradient processor L1. The linear gradient processor L1 conducts the process of the "linear gradient mode" (first step). The linear gradient processor L1 outputs step completion information to the mode selector 32. After that, the process proceeds to step S2.

(Step S2) The mode selector 32 switches to "constant voltage mode". The measured value acquirer 33 outputs the current value It and the voltage value Vₜ to the constant voltage processor C1. The constant voltage processor C1 conducts the process of the "constant voltage mode" (second step).

The constant voltage processor C1 outputs step completion information to the mode selector 32, and after that, ends the process.

### <Operations of linear gradient processor L1>

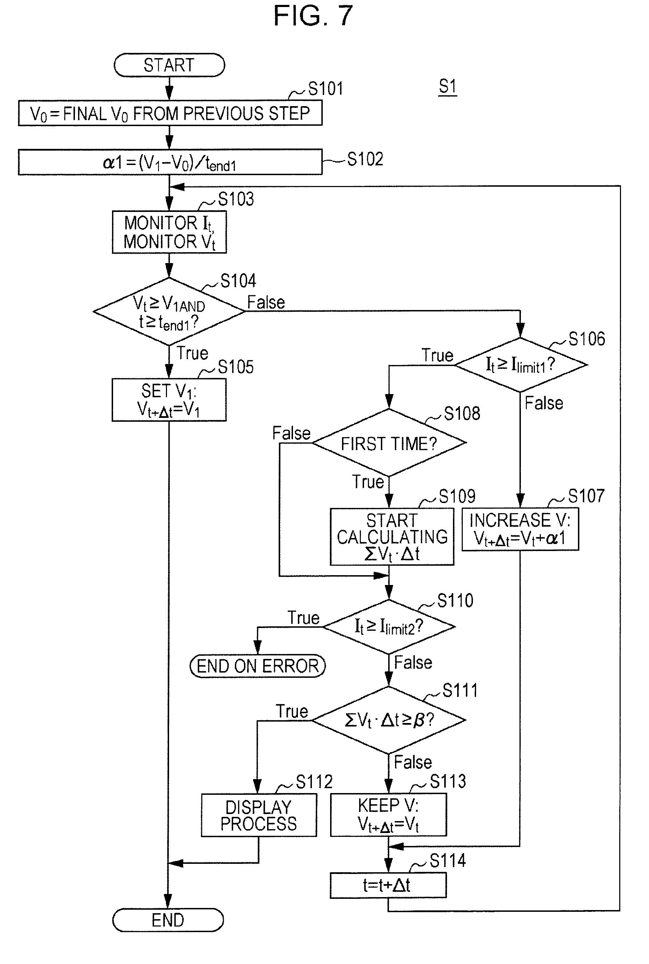

FIG. 7 is a flowchart illustrating an example of operations by the linear gradient processor L1 according to the present embodiment. This diagram illustrates operations in step S1 of FIG. 6.

(Step S101) The value decision unit L111 substitutes the final voltage value from the last step process into the voltage value V₀ (in the present embodiment, V₀ = 0). After that, the process proceeds to step S102.

(Step S102) The value decision unit L111 subtracts the voltage value V₀ from the target voltage value V₁.

The value decision unit L111 divides the subtracted value by the end time t_{end1} (in the present embodiment, t_{end1} = t₁), and substitutes the divided value into the increase value α1. After that, the process proceeds to step S103.

(Step S103) The value decision unit L111 acquires the current value It and the voltage value Vₜ from the measured value acquirer 33. In other words, the value decision unit L111 monitors the current value It and the voltage value Vₜ. After that, the process proceeds to step S103.

(Step S104) The end controller L112 determines whether or not to end the step process, by determining whether or not the voltage value Vₜ acquired in step S102 is equal to or greater than the target voltage value V₁, and in addition, the time t is equal to or greater than the end time t_{end1}.

Note that the end controller L112 may also determine only whether or not the voltage value Vt is equal to or greater than the target voltage value V₁.

In the case of determining that the voltage value Vₜ is equal to or greater than the target voltage value V₁ and additionally that the time t is equal to or greater than the end time t_{end1} (True), the process proceeds to step S105. Otherwise (False), the process proceeds to step S106.

(Step S105) The end controller L112 substitutes the voltage value V_{t+Δt} into the target voltage value V₁, and outputs the voltage value V_{t+Δt} to the power controller 37. The end controller L112 outputs step completion information to the mode selector 32, and the linear gradient processor L1 completes the step process. In other words, in the case of a next step process, the power control device 3 proceeds to the next step process.

Meanwhile, in the case of no next step process, the power control device 3 ends electrophoresis.

(Step S106) The first comparing unit L114 determines whether or not to not increase the voltage value V_{t+Δt}, by determining whether or not the current value It acquired in step S102 is equal to or greater than the first limit value Iₗᵢₘᵢₜ₁. In the case of determining that the current value Iₜ is equal to or greater than the first limit value Iₗᵢₘᵢₜ₁ (True), the process proceeds to step S110. On the other hand, in the case of determining that the current value It is less than the first limit value Iₗᵢₘᵢₜ₁ (False), the process proceeds to step S107.

(Step S107) The voltage increase controller L115 adds the increase value α1 computed in step S103 to the voltage value Vₜ, and substitutes the added value into the voltage value V_{t+Δt}. The voltage increase controller L115 outputs the substituted voltage value V_{t+Δt} to the power controller 37. In other words, the voltage increase controller L115 increases the applied voltage. After that, the process proceeds to step S114.

(Step S108) The integral value comparing unit L120 determines whether or not the current step process is the first time that the current value It has become equal to or greater than the first limit value Iₗᵢₘᵢₜ₁ in step S106. In the case of determining that this is the first time (True), the process proceeds to step S109. On the other hand, in the case of determining that this is not the first time (False), the process proceeds to step S110.

(Step S109) The integral value comparing unit L120 starts calculating the time-integrated voltage value. In the specific calculation, the integral value comparing unit L120 multiplies the voltage value Vₜ acquired in step S102 by Δt. The integral value comparing unit L120 then adds the multiplied value V_{t×Δt} to the time-integrated voltage value stored by the integral value storage L119 to compute the time-integrated voltage value ∑ₛVₛ×Δt up to the time t. In other words, ∑ₛ denotes taking the sum of V_{t×Δt} since the current value Iₜ exceeded the first limit value Iₗᵢₘᵢₜ₁ in the current step process. After that, the process proceeds to step S110.

(Step S110) The second comparing unit L117 determines whether or not to not end the process of the linear gradient processor L1, by determining whether or not the current value It acquired in step S102 is equal to or greater than the second limit value Iₗᵢₘᵢₜ₂. In the case of determining that the current value It is equal to or greater than the second limit value Iₗᵢₘᵢₜ₂ (True), the error controller L118 ends the process on an error.

In other words, the power control device 3 aborts electrophoresis without proceeding to the next step process. On the other hand, in the case of determining that the current value Iₜ is less than the second limit value Iₗᵢₘᵢₜ₂ (False), the process proceeds to step S111.

(Step S111) The integral value comparing unit L120 determines whether or not the time-integrated voltage value whose calculation started in step S109 is equal to or greater than the limit value β. In the case of determining that the time-integrated voltage value is equal to or greater than the limit value β (True), the process proceeds to step S112. On the other hand, in the case of determining that the time-integrated voltage value is less than the limit value β (False), the process proceeds to step S113.

(Step S112) The error controller L118 presents a display indicating that the time-integrated voltage value is equal to or greater than the limit value β. Note that the error controller L118 initializes by substituting "0" into the time-integrated voltage value. Consequently, the error controller L118 completes the step process. In other words, in the case of a next step process, the power control device 3 proceeds to the next step process. Meanwhile, in the case of no next step process, the power control device 3 ends electrophoresis.

(Step S113) The voltage keep controller L121 substitutes the voltage value Vₜ acquired in step S102 into the voltage value V_{t+Δt}. The voltage keep controller L121 outputs the voltage value V_{t+Δt} to the power controller 37. In other words, the voltage keep controller L121 keeps the voltage value. Note that the voltage keep controller L121 computes a total sum Δtₖₑₑₚ of the time that the voltage value has been kept. After that, the process proceeds to step S114.

(Step S114) The linear gradient processor L1 sets t = t+Δt, and proceeds to step S102.

### <Operations of constant voltage processor C1>

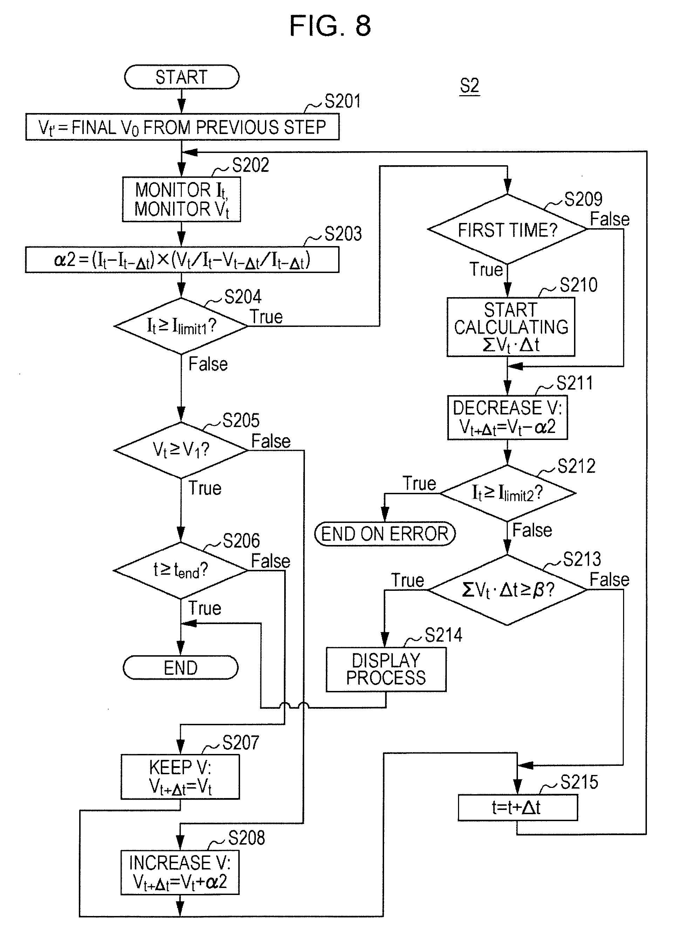

FIG. 8 is a flowchart illustrating an example of operations by the constant voltage processor C1 according to the present embodiment. This diagram illustrates operations in step S2 of FIG. 6.

(Step S201) The value decision unit C111 substitutes the final voltage value from the last step process into the voltage value V_{t'} (in the present embodiment, V_{t'} = V₁). At this point, t' refers to the time at which the last step process completed (t' = t_{end1}+Δtₖₑₑₚ), or in other words, the start time of the current step process. After that, the process proceeds to step S202.

(Step S202) The value decision unit C111 acquires the current value It and the voltage value Vₜ from the measured value acquirer 33. In other words, the value decision unit C111 monitors the current value It and the voltage value Vₜ. Note that the value decision unit C111 stores the acquired current value It and voltage value Vₜ. In addition, the value decision unit C111 computes an end time t_{end} by adding the application time to the start time of the step process (in the present embodiment, the end time t_{end} = t_{end1}+Δtₖₑₑₚ+(t₂-t₁) = t₁+Δtₖₑₑₚ+ (t₂-t₁) = t₂+Δtₖₑₑₚ). After that, the process proceeds to step S203.

(Step S203) The value decision unit C111, on the basis of the current value It and the voltage value Vₜ acquired in step S202 and the current value I_{t-Δt} and the voltage value V_{t-Δt} stored in the last step S202, computes (Iₜ-I_{t-Δt}) × [(Vₜ/Iₜ) - (V_{t-Δt}/I_{t-Δt})]. The value decision unit C111 substitutes the computed value into the differential value α2. In other words, the differential value α2 is the value obtained by dividing the difference in current values by the difference in resistance values for the time t and the time t-Δt. That is, the value decision unit C111 computes the variation in the resistance value so that the current It will not exceed the first limit value Iₗᵢₘᵢₜ₁, and determines a decrement of the voltage value on the basis of the computed resistance value. Alternatively, the value decision unit C111 computes the variation in the resistance value so that the current It will become less than or equal to the first limit value Iₗᵢₘᵢₜ₁, and determines a decrement of the voltage value on the basis of the computed resistance value.

After that, the process proceeds to step S204.

(Step S204) The first comparing unit C113 determines whether or not to decrease the voltage value V_{t+Δt}, by determining whether or not the current value It acquired in step S202 is equal to or greater than the first limit value Iₗᵢₘᵢₜ₁. In the case of determining that the current value It is equal to or greater than the first limit value Iₗᵢₘᵢₜ₁ (True), the process proceeds to step S209. On the other hand, in the case of determining that the current value Iₜ is less than the first limit value Iₗᵢₘᵢₜ₁ (False), the process proceeds to step S205.

(Step S205) The voltage comparing unit C114 determines whether or not to not increase the voltage value V_{t+Δt}, by determining whether or not the voltage value Vₜ acquired in step S202 is equal to or greater than the voltage value V₁. In the case of determining that the voltage value Vₜ is equal to or greater than the voltage value V₁ (True), the process proceeds to step S206. On the other hand, in the case of determining that the voltage value Vₜ is less than voltage value V₁ (False), the process proceeds to step S208.

(Step S206) The end controller C116 determines whether or not to end the process of the constant voltage processor C1, by determining whether or not the time t is equal to or greater than the end time t_{end}, or in other words, that the time t is at or after the end time tend. In the case of determining that the time t is equal to or greater than the end time tend (True), the constant voltage processor C1 completes the step process. In other words, in the case of a next step process, the power control device 3 proceeds to the next step process. Meanwhile, in the case of no next step process, the power control device 3 ends electrophoresis. On the other hand, in the case of determining that the time t is less than the end time t_{end}, or in other words, that the time t is before the end time t_{end} (False), the process proceeds to step S207.

(Step S207) The voltage keep controller C117 substitutes the voltage value Vₜ acquired in step S202 into the voltage value V_{t+Δt}. The voltage keep controller C117 outputs the voltage value V_{t+Δt} to the power controller 37. In other words, the voltage keep controller C117 keeps the voltage value. After that, the process proceeds to step S215.

(Step S208) The voltage increase controller C115 adds the differential value α2 computed in step S203 to the voltage value Vₜ, and substitutes the added value into the voltage value V_{t+Δt}. The voltage increase controller C115 outputs the substituted voltage value V_{t+Δt} to the power controller 37. In other words, the voltage increase controller C115 increases the applied voltage. After that, the process proceeds to step S215.

(Step S209) The integral value comparing unit C122 determines whether or not the current step process is the first time that the current value It has become equal to or greater than the first limit value Iₗᵢₘᵢₜ₁ in step S204. In the case of determining that this is the first time (True), the process proceeds to step S210. On the other hand, in the case of determining that this is not the first time (False), the process proceeds to step S211.

(Step S210) The integral value comparing unit C122 starts calculating the time-integrated voltage value. In the specific calculation, the integral value comparing unit C122 multiplies the voltage value Vₜ acquired in step S202 by Δt. The integral value comparing unit C122 then adds the multiplied value V_{t×Δt} to the time-integrated voltage value stored by the integral value storage C121 to compute the time-integrated voltage value ∑ₛVₛ×Δt up to the time t. In other words, ∑ₛ denotes taking the sum of V_{t×Δt} since the current value It exceeded the first limit value Iₗᵢₘᵢₜ₁ in the current step process. After that, the process proceeds to step S211.

(Step S211) The voltage decrease controller C118 subtracts the differential value α2 computed in step S203 from the voltage value Vₜ, and substitutes the subtracted value into the voltage value V_{t+Δt}. The voltage decrease controller C118 outputs the substituted voltage value V_{t+Δt} to the power controller 37. In other words, the voltage increase controller C115 decreases the applied voltage. After that, the process proceeds to step S212.

(Step S212) The second comparing unit C120 determines whether or not to not end the process of the constant voltage processor C1, by determining whether or not the current value It acquired in step S202 is equal to or greater than the second limit value Iₗᵢₘᵢₜ₂. In the case of determining that the current value It is equal to or greater than the second limit value Iₗᵢₘᵢₜ₂ (True), the error controller C123 ends the process on an error. In other words, the power control device 3 aborts electrophoresis without proceeding to the next step process. On the other hand, in the case of determining that the current value It is less than the second limit value Iₗᵢₘᵢₜ₂ (False), the process proceeds to step S213.

(Step S213) The integral value comparing unit C122 determines whether or not the time-integrated voltage value whose computation started in step S210 is equal to or greater than the limit value β. In the case of determining that the time-integrated voltage value is equal to or greater than the limit value β (True), the process ends. On the other hand, in the case of determining that the time-integrated voltage value is less than the limit value β (False), the process proceeds to step S215.

(Step S214) The error controller C123 presents a display indicating that the time-integrated voltage value is equal to or greater than the limit value β. Note that the error controller C123 initializes by substituting "0" into the time-integrated voltage value. Consequently, the error controller C123 completes the step process. In other words, in the case of a next step process, the power control device 3 proceeds to the next step process. Meanwhile, in the case of no next step process, the power control device 3 ends electrophoresis.

(Step S215) The constant voltage processor C1 sets t = t+Δt, and proceeds to step S202.

### <Operational effects and advantages>

(The case where the current value It is less than the first limit value Iₗᵢₘᵢₜ₁)

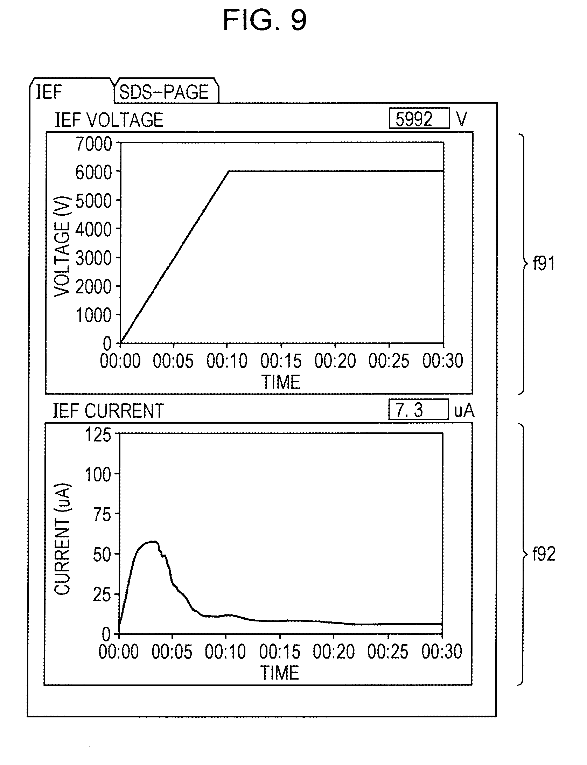

FIG. 9 is a diagram illustrating an example of the relationship between the voltage value and the current value according to the present embodiment. In this diagram, on the graph f91 labeled with the sign f91, the horizontal axis is the time t, while the vertical axis is the voltage value Vₜ. On the graph f92 labeled with the sign f92, the horizontal axis is the time t, while the vertical axis is the current value It. The graph f91 illustrates raising the voltage value of the applied voltage from 0 V to 6000 V in "linear gradient mode" from a time of 0 min to a time of 10 min (t₁ = 10 min). In addition, the graph f91 illustrates keeping the voltage value of the applied voltage in "constant voltage mode" from a time of 10 min to a time of 30 min (t₂-t₁ = 20 min).

FIG. 10 is a diagram illustrating another example of the relationship between the voltage value and the current value according to the present embodiment. FIG. 10 is a schematic view of FIG. 9. In FIG. 10, on the graph f101 labeled with the sign f101, the horizontal axis is the time t, while the vertical axis is the voltage value Vₜ.

On the graph f102 labeled with the sign f102, the horizontal axis is the time t, while the vertical axis is the current value It. The graph f101 illustrates increasing the voltage value of the applied voltage from 0 V to V₁ V in "linear gradient mode" from the time 0 to the time t₁. In addition, the graph f101 illustrates keeping the voltage value of the applied voltage in "constant voltage mode" from the time t₁ to the time t₂ (t₂ = t_{end}).

On the graph f101, the voltage value Vₜ is proportional to t from the time 0 to the time t₁. In other words, the slope (gradient) of the voltage value Vₜ is linear. Also, the voltage value Vₜ is kept at V₁ V from the time t₁ to the time t₂.

On the graph f102, the current value It rises until a time t_{d}, and after the time t_{d} the current value It decreases. This is because the resistance value increases due to polarization of the polar molecules in the conducting medium, for example. In FIG. 10, after the time td, the increase in the resistance value due to polarization (ΔR) is greater than the rise in the voltage value (ΔV), and thus the current value is shown to decrease.

In the above example, since the current value It is less than the first limit value Iₗᵢₘᵢₜ₁. electrophoresis may be conducted without producing high heat.

### (Linear gradient mode)

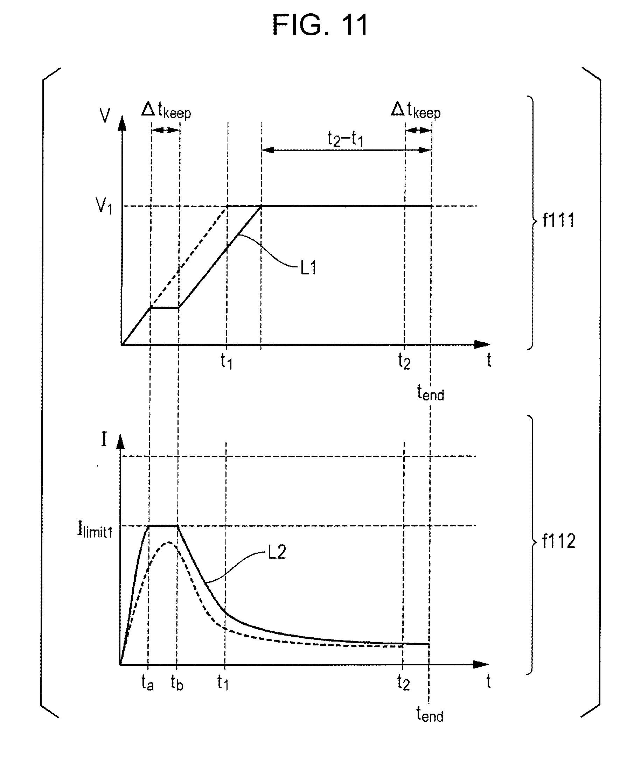

FIG. 11 is a diagram illustrating another example of the relationship between the voltage value and the current value according to the present embodiment. This diagram illustrates a case in which the current value It becomes equal to or greater than the first limit value Iₗᵢₘᵢₜ₁ in "linear gradient mode". In this diagram, on the graph f111 labeled with the sign f111, the horizontal axis is the time, while the vertical axis is the voltage value. On the graph f112 labeled with the sign f112, the horizontal axis is the time, while the vertical axis is the current value. The solid-line curve L1 labeled with the sign L1 represents the voltage value Vₜ, while the solid-line curve L2 labeled with the sign L2 represents the current value It.

The graph f112 illustrates that the current value It reaches the first limit value Iₗᵢₘᵢₜ₁ at a time tₐ. The graph f111 illustrates that the voltage value Vₜ is kept from the time tₐ (step S113 in FIG. 7). The graph f112 illustrates that the current value Iₜ becomes less than the first limit value Iₗᵢₘᵢₜ₁ from a time t_{b}. The graph f111 illustrates that the voltage is kept until the time t_{b}, and the voltage value is increased from the time t_{b} (step S107 in FIG. 7).

Note that the curve L1 illustrates that the applied voltage is kept during the period of Δtₖₑₑₚ in linear gradient mode, and the application time t₁ is increased by Δtₖₑₑₚ. Additionally, the curve L1 illustrates that in "constant voltage mode", the voltage value V₁ is applied during the application time t₂-t₁. Note that the control in FIG. 11 is also designated a time shift.

In this way, in the case in which the current value It is equal to or greater than the first limit value Iₗᵢₘᵢₜ₁, the power control device 3 conducts control to not increase the applied voltage. Consequently, in the electrophoresis system, the polarization of polar molecules may be suppressed, and the current value It may be decreased. Thus, in the electrophoresis system, high heat may be prevented, and a more accurate analysis result may be obtained.

In addition, in the case in which the current value It is equal to or greater than the first limit value Iₗᵢₘᵢₜ₁, the power control device 3 conducts control to keep the applied voltage. In other words, by conducting control to keep the voltage, the polarization of polar molecules may be suppressed without decreasing the voltage, and the current value It may be decreased. In this case, in the electrophoresis system, oscillations in the current value Iₜ due to changes in the voltage value Vₜ may be prevented.

Next, a case of not conducting control in linear gradient mode according to the present embodiment will be described.

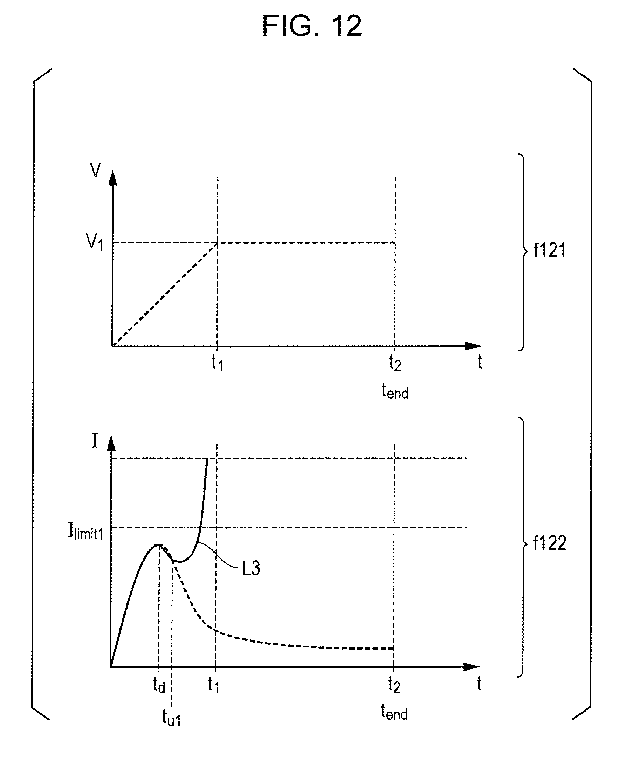

FIG. 12 is a diagram illustrating an example of the relationship between the voltage value and the current value. In this diagram, on the graph f121 labeled with the sign f121, the horizontal axis is the time, while the vertical axis is the voltage value. On the graph f122 labeled with the sign f122, the horizontal axis is the time, while the vertical axis is the current value. The solid-line curve L3 labeled with the sign L3 represents the current value Iₜ.

The graph f121 illustrates the electrophoresis parameter, or in other words, the voltage value Vₜ in the case in which ideal control is conducted. The dashed line on the graph f121 is the same shape as the solid line on the graph f101 in FIG. 10.

On the graph f122, the curve L3 illustrates that the current value It increases after a time tᵤ₁. This indicates that the current value increases because the increase in the resistance value due to polarization (ΔR) is less than the rise in the voltage value (ΔV), for example.

In contrast, in the case in which the current value It is equal to or greater than the first limit value Iₗᵢₘᵢₜ₁, the power control device 3 conducts control to not increase the applied voltage (see FIG. 11). Consequently, in the electrophoresis system, the polarization of polar molecules may be suppressed, and the current value Iₜ may be decreased. Thus, in the electrophoresis system, high heat may be prevented.

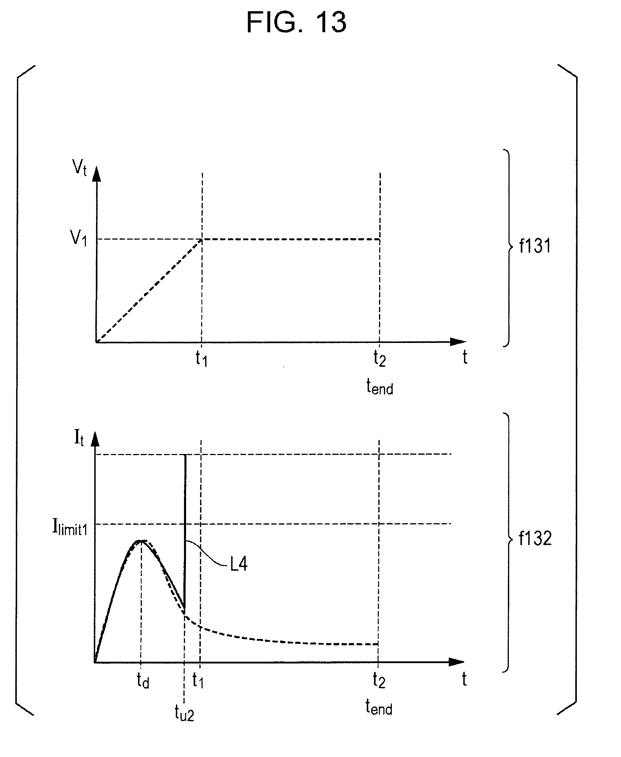

FIG. 13 is a diagram illustrating another example of the relationship between the voltage value and the current value. In this diagram, on the graph f131 labeled with the sign f131, the horizontal axis is the time t, while the vertical axis is the voltage value Vₜ.

On the graph f132 labeled with the sign f132, the horizontal axis is the time t, while the vertical axis is the current value Iₜ.

The graph f131 illustrates the electrophoresis parameter, or in other words, the voltage value Vₜ in the case in which ideal control is conducted. The graph f131 is the same as the graph f101 in FIG. 10.

On the graph f132, the solid-line curve L4 labeled with the sign L4 illustrates that the current value It increases suddenly at a time tᵤ₂. For example, the curve L4 indicates that the current value It jumps up by a factor of 10 or more within 0.1 seconds. This is because the conducting medium has dried or carbonization due to heat produced by electric power, and a short-circuit current is flowing in that portion, for example.

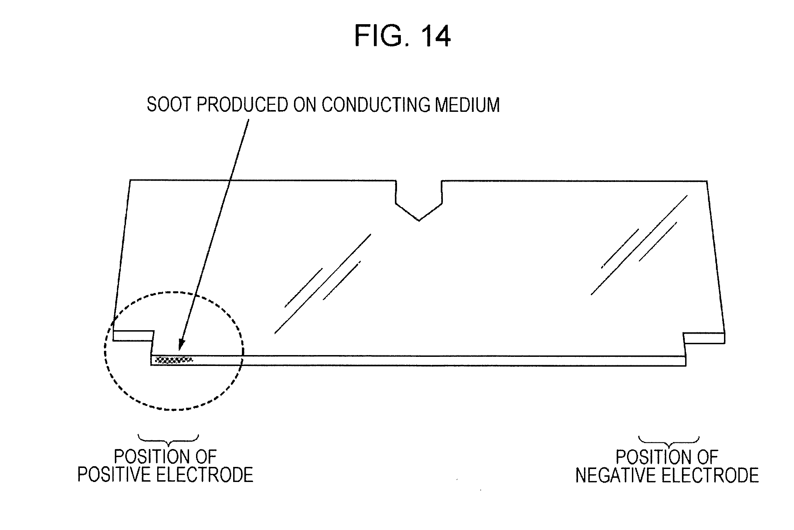

FIG. 14 is a diagram illustrating an example of an IEF chip when soot is produced. On the IEF chip in the diagram, soot produced by carbonization of the conducting medium adheres at the position of the positive electrode.

In contrast, the power control device 3 conducts control to end the process in the case in which the time-integrated voltage value obtained by integrating the voltage value Vₜ over the time t is equal to or greater than the limit value β. In addition, the power control device 3 conducts control to end the process in the case in which the current value It is equal to or greater than the second limit value Iₗᵢₘᵢₜ₂. Consequently, in the electrophoresis system, high heat may be prevented, and it is possible to prevent equipment failure and avoid danger. Note that in experiments, soot was produced when a high voltage (for example, 6000 V or more) was applied. Also, even in the case of applying a high voltage, soot was not produced if the voltage was only applied for up to 10 minutes. Consequently, the limit value P may be set to 1000 Vh (6000 V × 10 min ÷ 60 min/h), for example. Also, Δt may be set within the time taken by the current value It to jump up (within 0.1 s).

In addition, in the case in which the current value It is equal to or greater than the first limit value Iₗᵢₘᵢₜ₁, the power control device 3 conducts control to not increase the applied voltage (see FIG. 11). Consequently, in the electrophoresis system, drying and carbonization of the conducting medium may be prevented from occurring in some cases, and high heat may be prevented.

### (Constant voltage mode)

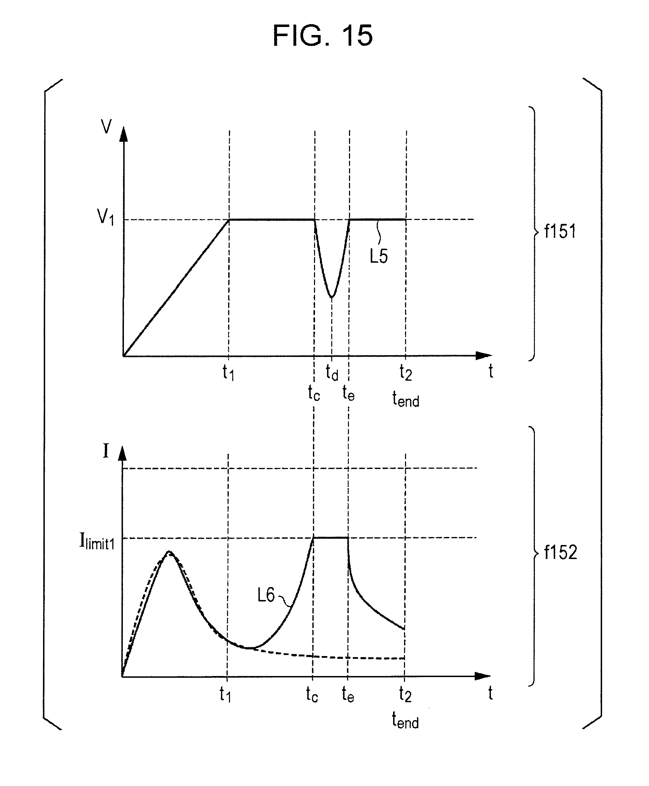

FIG. 15 is a diagram illustrating another example of the relationship between the voltage value and the current value according to the present embodiment. This diagram illustrates a case in which the current value It becomes equal to or greater than the first limit value Iₗᵢₘᵢₜ₁ in "constant voltage mode". In this diagram, on the graph f151 labeled with the sign f151, the horizontal axis is the time, while the vertical axis is the voltage value. On the graph f152 labeled with the sign f152, the horizontal axis is the time, while the vertical axis is the current value. The solid-line curve L5 labeled with the sign L5 represents the voltage value Vₜ, while the solid-line curve L6 labeled with the sign L6 represents the current value It.

The graph f152 illustrates that the current value It reaches the first limit value Iₗᵢₘᵢₜ₁ at a time t_{c}. The graph f151 illustrates that the voltage value Vₜ is decreased starting from the time t_{c} (step S211 in FIG. 8). The graph f152 illustrates that the current value Iₜ becomes less than the first limit value Iₗᵢₘᵢₜ₁ starting after a time t_{d}. The graph f151 illustrates that the voltage value Vₜ is increased starting from the time t_{d} (step S208 in FIG. 8). The graph f151 illustrates that the voltage value Vₜ becomes V₁ at the time tₑ, and after that, the voltage value Vₜ is kept (step S207 in FIG. 8).

In this way, in the case in which the current value It is equal to or greater than the first limit value Iₗᵢₘᵢₜ₁, the power control device 3 conducts control to make the applied voltage fall below a designated value V₁. Consequently, in the electrophoresis system, the polarization of polar molecules may be suppressed, and the current value It may be decreased. Thus, in the electrophoresis system, high heat may be prevented, and a more accurate analysis result may be obtained. Also, the power control device 3 may apply a maximum voltagextime without loss of time, according to changes in the resistance value of the conducting medium.

Next, a case of not conducting control in constant voltage mode according to the present embodiment will be described.

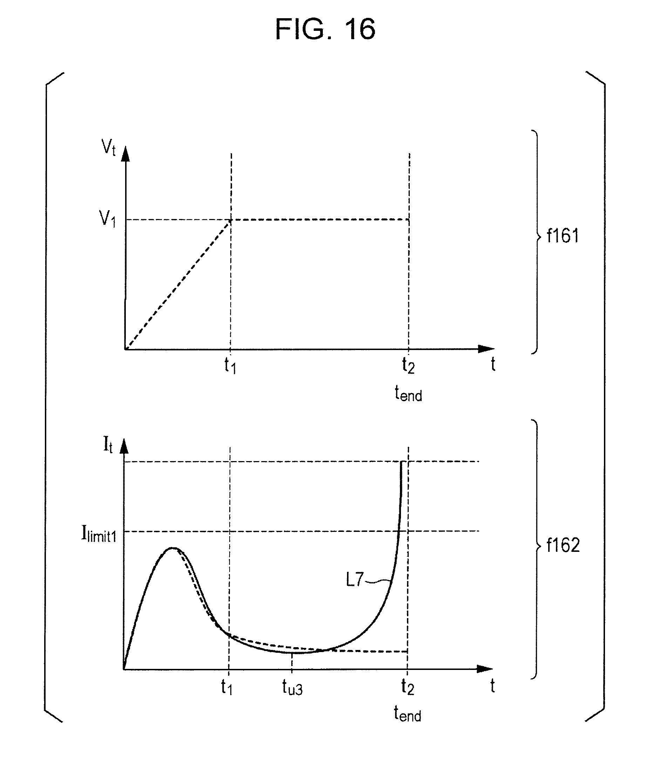

FIG. 16 is a diagram illustrating another example of the relationship between the voltage value and the current value. In this diagram, on the graph f161 labeled with the sign f161, the horizontal axis is the time t, while the vertical axis is the voltage value Vₜ.

On the graph f162 labeled with the sign f162, the horizontal axis is the time t, while the vertical axis is the current value It. The solid-line curve L7 labeled with the sign L7 represents the voltage value Vₜ.

The graph f161 illustrates the electrophoresis parameter, or in other words, the voltage value Vₜ in the case in which ideal control is conducted. The graph f161 is the same as the graph f101 in FIG. 10.

On the graph f162, the curve L7 illustrates that the current value It increases after a time tᵤ₃. This indicates that the current value increases because the increase in the resistance value due to polarization (ΔR) is less than the rise in the voltage value (ΔV), for example.

In contrast, in the case in which the current value It is equal to or greater than the first limit value Iₗᵢₘᵢₜ₁, the power control device 3 conducts control to not increase the applied voltage (see FIG. 15). Consequently, in the electrophoresis system, the polarization of polar molecules may be suppressed, and the current value It may be decreased. Thus, in the electrophoresis system, high heat may be prevented.

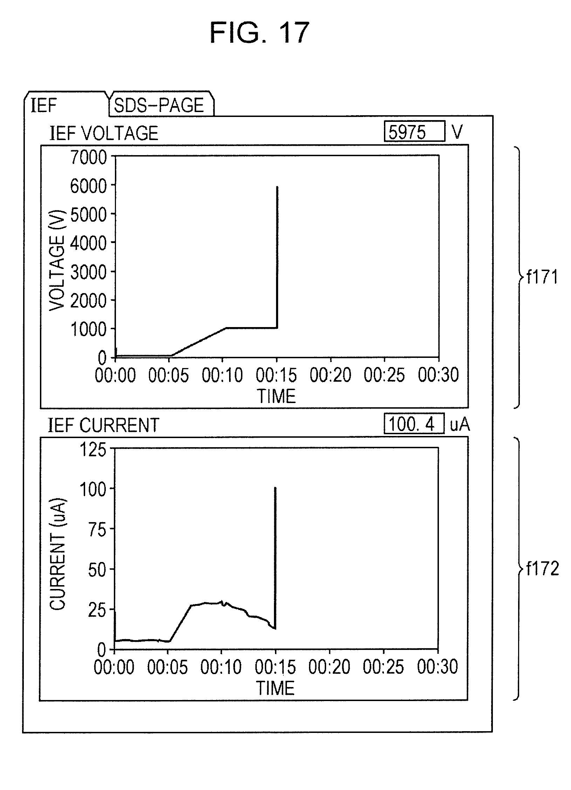

FIG. 17 is a diagram illustrating another example of the relationship between the voltage value and the current value. In this diagram, on the graph f171 labeled with the sign f171, the horizontal axis is the time, while the vertical axis is the voltage value. On the graph f172 labeled with the sign f172, the horizontal axis is the time, while the vertical axis is the current value. The graph f171 illustrates raising the voltage value of the applied voltage from 0 V to 1000 V in "linear gradient mode" from a time of 5 min to a time of 10 min. In addition, the graph f171 illustrates that control is conducted to keep the voltage value of the applied voltage in "constant voltage mode" from a time of 10 min to a time of 15 min.

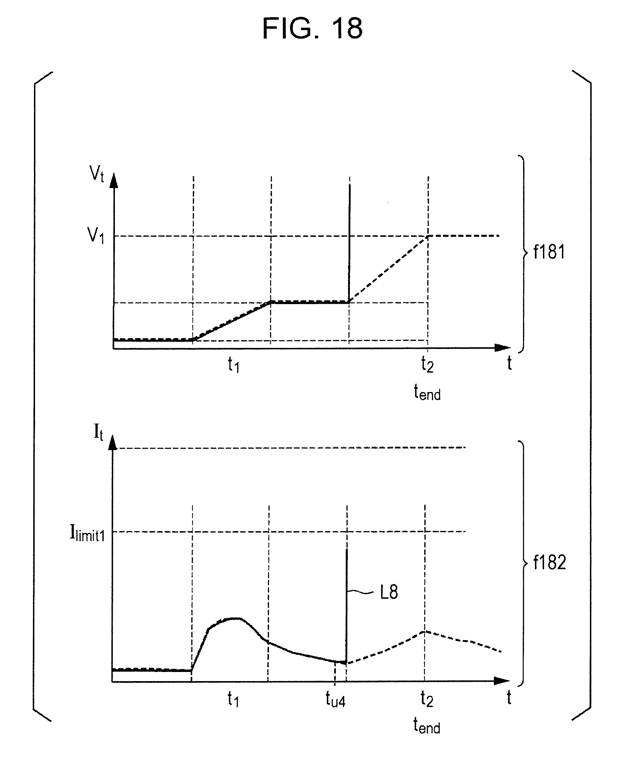

FIG. 18 is a diagram illustrating another example of the relationship between the voltage value and the current value. FIG. 18 is a schematic view of FIG. 17. In this diagram, on the graph f181 labeled with the sign f181, the horizontal axis is the time, while the vertical axis is the voltage value. On the graph f182 labeled with the sign f182, the horizontal axis is the time, while the vertical axis is the current value. The solid-line curve L8 labeled with the sign L8 represents the current value It. The curve L8 illustrates that a short-circuit current is produced at a time tᵤ₄, and both the voltage value Vₜ and the current value It increase suddenly.

In contrast, the power control device 3 conducts control to end the process in the case in which the time-integrated voltage value obtained by integrating the voltage value Vₜ over the time t is equal to or greater than the limit value β. In addition, the power control device 3 conducts control to end the process in the case in which the current value It is equal to or greater than the second limit value Iₗᵢₘᵢₜ₂. Consequently, in the electrophoresis system, high heat may be prevented, and it is possible to prevent equipment failure and avoid danger. In addition, in the case in which the current value It is equal to or greater than the first limit value Iₗᵢₘᵢₜ₁, the power control device 3 conducts control to not increase the applied voltage (see FIG. 11). Consequently, in the electrophoresis system, drying and carbonization of the conducting medium may be prevented from occurring in some cases, and high heat may be prevented.

### (Modifications)

Note that in the foregoing embodiment, the power control device 3 may also arbitrarily combine voltage application modes. For example, by combining "linear gradient mode" and "constant voltage mode" multiple times, the power control device 3 may minimize the current value, and improve sample convergence.

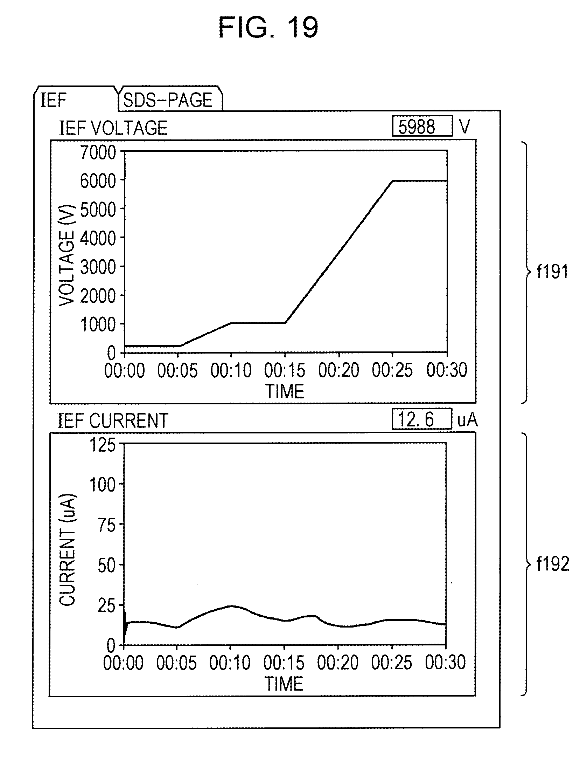

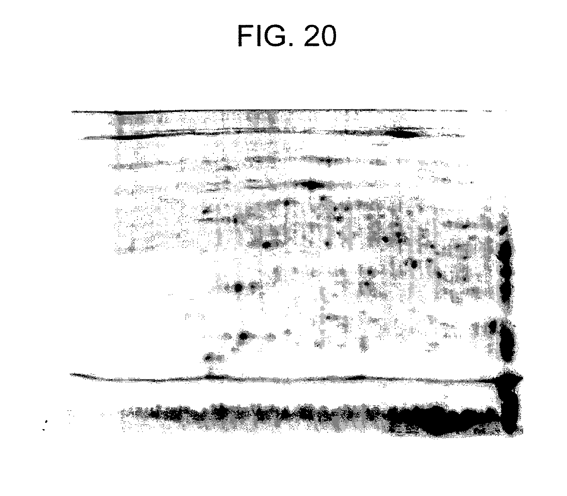

For example, in the power control device 3, assume that "constant voltage mode" is conducted at 200 V (5 min application time), and after that, "linear gradient mode" is conducted up to a target voltage value of 1000 V (5 min application time). After that, in the power control device 3, "constant voltage mode" is conducted at 1000 V (5 min application time), and after that, "linear gradient mode" is conducted up to a target voltage value of 6000 V (10 min application time). FIG. 19 illustrates the relationship between the voltage value and the current value in this case, and FIG. 20 illustrates an electrophoresis spot analysis result.

FIG. 19 is a diagram illustrating an example of the relationship between the voltage value and the current value according to an exemplary modification of the present embodiment. In this diagram, on the graph f191 labeled with the sign f191, the horizontal axis is the time t, while the vertical axis is the voltage value Vₜ. On the graph f192 labeled with the sign f192, the horizontal axis is the time t, while the vertical axis is the current value It.

The graph f192 illustrates that the current value It is less than 50 µA. In other words, by combining "linear gradient mode" and "constant voltage mode" multiple times, the power control device 3 is able to minimize the current value.

FIG. 20 is a diagram illustrating an example of a spot analysis result according to an exemplary modification of the present embodiment.

In this way, in the power control device 3, clear spots may be obtained and sample convergence may be improved in electrophoresis.

Additionally, in the foregoing embodiment, the power control device 3 varies the gradient of the voltage value Vₜ versus the time t in the case in which the current value It becomes equal to or greater than the first limit value Iₗᵢₘᵢₜ₁, thereby conducting recovery so that the voltage value V₁ is reached by the application time t₁. However, the present invention is not limited thereto, and another voltage application technique may also be used in linear gradient mode.

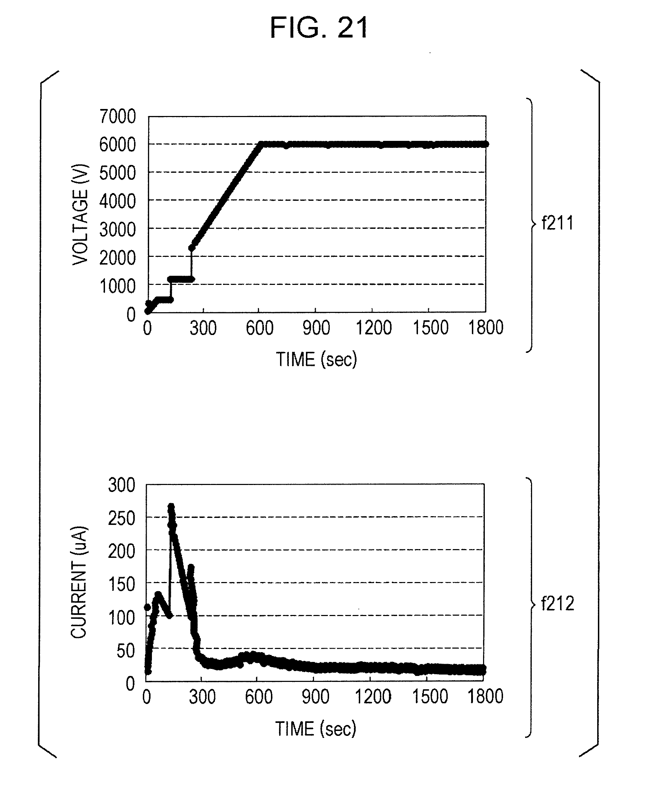

For example, in the case in which the current value It becomes less than the first limit value Iₗᵢₘᵢₜ₁ after keeping the applied voltage constant, the power control device 3 may set the applied voltage to a higher value than the kept voltage value. In this case, the value decision unit L111 decides an increase value α1' of the voltage value on the basis of the target voltage value V₁, the final configured voltage value from the last step process, and the application time t₁, for example. Specifically, the value decision unit L111 decides an increase value α1' = (target voltage value V₁-final configured voltage value from last step process) ÷ application time t₁. The voltage increase controller L115 multiplies the time to keep the applied voltage by the increase value α1', adds the multiplied value to the voltage value Vₜ, and substitutes the added value into the voltage value V_{t+Δt}. FIG. 21 illustrates the relationship between the voltage value and the current value in this case.

FIG. 21 is a diagram illustrating an example of the relationship between the voltage value and the current value according to another exemplary modification of the present embodiment. In this diagram, on the graph f211 labeled with the sign f211, the horizontal axis is the time, while the vertical axis is the voltage value. On the graph f212 labeled with the sign f212, the horizontal axis is the time, while the vertical axis is the current value.

This diagram illustrates that, when increasing the applied voltage after having kept the applied voltage constant, the current value It may increase in some cases. In other words, with the recovery according to the foregoing embodiment, change in the voltage V₁ is continuous, and increases in the current value It may be further prevented.

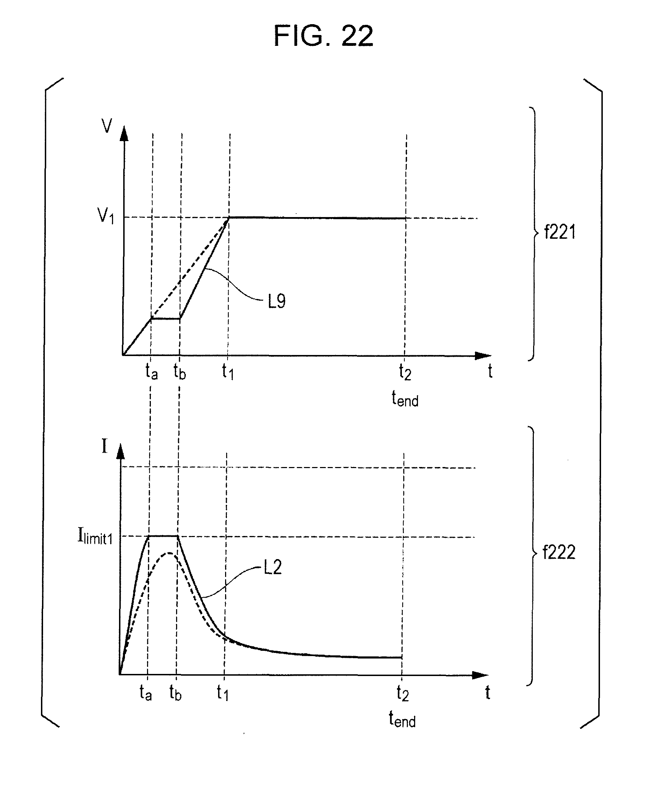

As another example, the power control device 3 may also modify the gradient of the applied voltage versus time in the case in which the current value It becomes equal to or greater than the first limit value Iₗᵢₘᵢₜ₁ in "linear gradient mode". For example, the power control device 3 may modify the gradient so that the end time tend becomes fixed. FIG. 22 illustrates the relationship between the voltage value and the current value in this case.

FIG. 22 is a diagram illustrating an example of the relationship between the voltage value and the current value according to another exemplary modification of the present embodiment. In this diagram, on the graph f221 labeled with the sign f221, the horizontal axis is the time, while the vertical axis is the voltage value. On the graph f222 labeled with the sign f222, the horizontal axis is the time, while the vertical axis is the current value. The solid-line curve L9 labeled with the sign L9 represents the voltage value Vₜ.

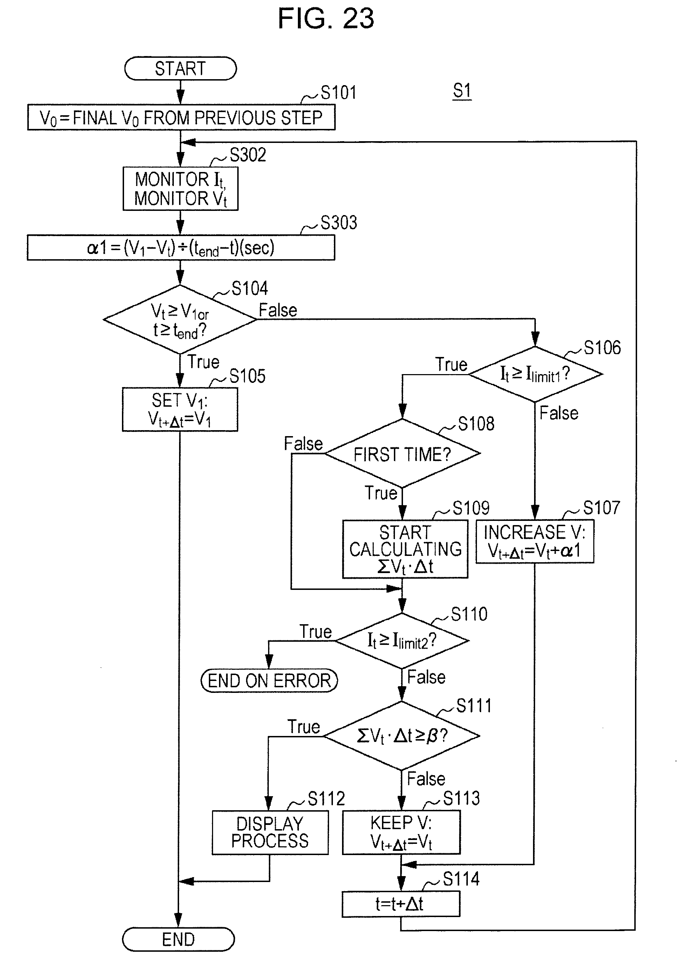

FIG. 23 illustrates an example of operations by a linear gradient processor in the case of FIG. 22.

FIG. 23 is a flowchart illustrating an example of operations by a linear gradient processor according to the present modification.

When comparing the flowchart in FIG. 23 to the flowchart in FIG. 7, the processes in steps S302 and S303 differ. However, since the other processes are similar to FIG. 7, description thereof will be reduced or omitted. Note that the process proceeds to step S302 after step S101 and after step S114.

(Step S302) The value decision unit L111 acquires the current value It and the voltage value Vₜ from the measured value acquirer 33. In other words, the value decision unit L111 monitors the current value It and the voltage value Vₜ. After that, the process proceeds to step S303.

(Step S303) The value decision unit L111 computes an end time tend by adding the application time to the start time of the step (in the present embodiment, the end time t_{end} = 0 + t₁ = t₁). The value decision unit L111 subtracts the voltage value Vₜ acquired in step S102 from the target voltage value V₁. The value decision unit L111 divides the subtracted value by the remaining time (end time t_{end} - time t), and substitutes the divided value into the increase value α1. After that, the process proceeds to step S104.

Note that t' becomes t' = t₁ in the case of conducting the step process in FIG. 8 after the step process in FIG. 23.

Additionally, in the foregoing embodiment, electrophoresis may be conducted on multiple IEF chips 4 at once in the electrophoresis system.

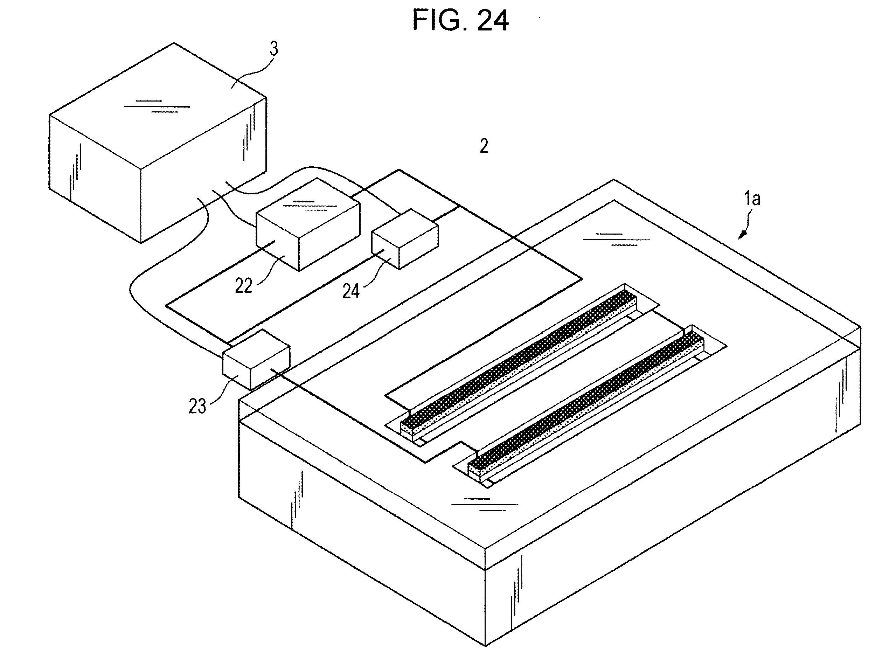

FIG. 24 is a perspective view of an electrophoresis system according to another exemplary modification of the present embodiment. In this diagram, the electrophoresis tool 1a differs from the electrophoresis tool 1 of FIG. 1. The electrophoresis tool 1a is provided with multiple electrophoresis chambers (not illustrated). An IEF chip 4 is installed in each of the electrophoresis chambers.

In FIG. 24, two IEF chips 4 are connected in series, but the present invention is not limited thereto, and the IEF chips 4 may also be connected in parallel. However, connecting the two IEF chips 4 in series enables easier capturing of changes of resistance in the conducting medium.

Note that parts of the power control device 3 in the embodiment discussed above may also be realized with a computer, for example. In this case, a program for realizing the control functions may be recorded to a computer-readable recording medium, and the device may be realized by causing a computer system to read and execute the program recorded on the recording medium. Note that the "computer system" referred to herein is a computer system built into the power control device 3, and is assumed to include an OS and hardware such as peripheral devices. In addition, the "computer-readable recording medium" refers to a portable medium such as a flexible disk, a magneto-optical disc, ROM, or a CD-ROM, or a storage device such as a hard disk built into the computer system. Furthermore, the term "computer-readable recording medium" may also encompass media that briefly or dynamically retain the program, such as a communication line in the case of transmitting the program via a network such as the Internet or a communication channel such as a telephone line, as well as media that retain the program for a given period of time, such as volatile memory inside the computer system acting as the server or client in the above case. Moreover, the above program may be for realizing part of the functions discussed earlier, and may also realize the functions discussed earlier in combination with programs already recorded to the computer system.

In addition, all or part of the power control device 3 in the foregoing embodiment may also be realized as an integrated circuit realized by a methodology such as large-scale integration (LSI). The respective function blocks of the power control device 3 may be realized as individual processors, or all or part thereof may be integrated as a single processor.

Furthermore, the circuit integration methodology is not limited to LSI and may be also be realized with special-purpose circuits, or with general-purpose processors. In addition, if progress in semiconductor technology yields integrated circuit technology that may substitute for LSI, an integrated circuit according to that technology may also be used.

The foregoing thus describes an embodiment of the present invention in detail and with reference to the drawings. However, specific configurations are not limited to the foregoing, and various design modifications and the like are possible within a scope that does not depart from the spirit of the present invention.

### Industrial Applicability

The present invention may be applied to a control method, a control device, a control system, and a control program or the like that enables a more accurate analysis result to be obtained.

### Reference Signs List

- 1, 1a: electrophoresis tool
- 2: power supply circuit
- 3: power control device
- 211: positive electrode
- 212: negative electrode
- 22: power source device
- 23: current measurement device
- 24: voltage measurement device
- 11: electrophoresis chamber
- 4: IEF chip
- 41: support member
- 42: conducting medium
- 31: input unit
- 32: mode selector
- 33: measured value acquirer
- 34: output unit
- L1: linear gradient processor
- C1: constant voltage processor
- 37: power controller
- L111: value decision unit
- L112: end controller
- L113: first limit value storage
- L114: first comparing unit
- L115: voltage increase controller
- L116: second limit value storage
- L117: second comparing unit
- L118: error controller
- L119: integral value storage
- L120: integral value comparing unit
- L121: voltage keep controller
- C111: value decision unit
- C112: first limit value storage
- C113: first comparing unit
- C114: voltage comparing unit
- C115: voltage increase controller
- C116: end controller
- C117: voltage keep controller
- C118: voltage decrease controller
- C119: second limit value storage
- C120: second comparing unit
- C121: integral value storage
- C122: integral value comparing unit
- C123: error controller

## Claims

1. A control method comprising:
an electrophoresis control device, on the basis of a value of current flowing due to applying a voltage to a conducting medium, controlling an amount of electric power to supply to the conducting medium.

2. The control method according to Claim 1, wherein
the controlling of the amount of electric power controls the amount of electric power to supply to the conducting medium on the basis of a value of current flowing in the conducting medium, and a predetermined threshold value.

3. The control method according to Claim 2, wherein
the controlling of the amount of electric power controls the amount of electric power to supply to the conducting medium on the basis of a value of current flowing in the conducting medium, a first threshold value, and a second threshold value.

4. The control method according to Claim 1, wherein
the conducting medium contains polar molecules and ampholyte.

5. The control method according to Claim 1 or Claim 2, wherein
in the power control process, a voltage value to apply to the conducting medium is controlled.

6. The control method according to Claim 2, wherein
the controlling of the amount of electric power keeps constant the voltage value to apply to the conducting medium in a case in which a value of current flowing in the conducting medium has reached the threshold value.

7. The control method according to Claim 2, wherein
the controlling of the amount of electric power decreases the voltage value to apply to the conducting medium in a case in which a value of current flowing in the conducting medium has reached the threshold value.

8. The control method according to Claim 2, wherein
the controlling of the amount of electric power computes a resistance value variation so that a value of current flowing in the conducting medium will not exceed the threshold value, and controls a voltage value on the basis of the resistance value variation.

9. The control method according to Claim 1, wherein
the controlling of the amount of electric power applies voltage to the conducting medium in a constant voltage mode that maintains a voltage value, or in a linear gradient mode that linearly increases a voltage value.

10. The control method according to Claim 2, wherein
the controlling of the amount of electric power keeps constant the voltage value to apply to the conducting medium in a case in which a value of current flowing in the conducting medium reaches the threshold value while applying a voltage to the conducting medium in a linear gradient mode that linearly increases the voltage value, and
decreases the voltage value to apply to the conducting medium in a case in which a value of current flowing in the conducting medium reaches the threshold value while applying a voltage to the conducting medium in a constant voltage mode that maintains the voltage value.

11. The control method according to Claim 2, wherein
the controlling of the amount of electric power displays information indicating an error in a case in which the amount of electric power to supply to the conducting medium has exceeded a predetermined value.

12. The control method according to Claim 1, wherein
the conducting medium is a gel.

13. A control device comprising:
a controller that, on the basis of a value of current flowing due to applying a voltage to a conducting medium, controls an amount of electric power to supply to the conducting medium.

14. A control system comprising:
an electrophoresis tool equipped with a chamber in which a pair of electrodes contacting an inductive medium are disposed; and
a control device provided with a controller that, on the basis of a value of current flowing due to applying a voltage to the conducting medium, controls an amount of electric power to supply to the conducting medium.

15. A control program for causing a computer of a control device to control, on the basis of a value of current flowing due to applying a voltage to a conducting medium, an amount of electric power to supply to the conducting medium.
